# EUROPÄISCHE PATENTSCHRIFT

(11) **EP 4 166 311 B1**
(45) Veröffentlichungstag und Bekanntmachung des Hinweises auf die Patenterteilung: **18.09.2024**
(21) Anmeldenummer: 22198176.4
(22) Anmeldetag: 27.09.2022
(51) Int. Cl.: A22C 7/00, B30B 1/26

(54) **PRESSEINRICHTUNG**
PRESSING DEVICE
DISPOSITIF DE PRESSAGE

(30) Priorität: 12.10.2021 DE 102021126436
(43) Veröffentlichungstag der Anmeldung: 19.04.2023
(73) Patentinhaber: Textor Maschinenbau GmbH, 87787 Wolfertschwenden (DE)
(72) Erfinder: Müller, Fabian, Betzigau (DE); Mayer, Josef, Memmingerberg (DE); Hehle, Matthias, Waltenhofen (DE); Seidel, Markus, Egg an der Günz (DE)
(74) Vertreter: Manitz Finsterwald Patent- und Rechtsanwaltspartnerschaft mbB

(56) Entgegenhaltungen:
- WO-A1-90/03736
- CN-A- 112 006 074
- CN-A- 113 349 237
- DE-T5- 112018 001 445
- FR-A3- 2 548 089

## Beschreibung

Die Erfindung betrifft eine Presseinrichtung zum Pressen von Fleischprodukten, insbesondere gefrorenen und/oder angefrorenen Fleischprodukten, bevorzugt Frischfleischprodukten und/oder Bacon, mit einer sich entlang einer Längsrichtung erstreckenden Presskammer, in welche ein zu pressendes Produkt einbringbar ist. Die Presskammer umfasst zumindest ein Gegenelement und ein mittels eines Antriebs verfahrbares Pressmittel, wobei das Pressmittel zum Komprimieren des Produkts von einer Startposition entlang einer Pressrichtung auf das Gegenelement zu in eine Endposition verfahrbar ist.

Grundsätzlich sind Presseinrichtungen aus DE 11 2018 001 445 T5, WO 90/03736 A1, CN 112 006 074 A, FR 2 548 089 A3 und CN 113 349 237 A bekannt.

Derartige Presseinrichtungen können insbesondere dazu vorgesehen sein, Lebensmittelprodukte in eine vorbestimmte Form zu komprimieren, um die komprimierten Lebensmittel weiteren Verarbeitungsschritten zuführen zu können. Insbesondere Naturprodukte können im unverarbeiteten Zustand unregelmäßige Formen aufweisen, wobei die Lebensmittelprodukte durch ein Komprimieren mittels einer derartigen Presseinrichtung in eine vorgegebene und/oder standardisierte Form gebracht werden können, um weitere Verarbeitungsschritte zu ermöglichen. Beispielsweise kann es vorgesehen sein, mittels einer solchen Presseinrichtung etwa gefrorene Frischfleischprodukte oder Bacon in eine rechteckige Form zu bringen, um die derart standardisierten Produkte beispielsweise verpacken oder mittels einer Aufschneidevorrichtung in gleichartige Scheiben schneiden zu können, um aus den Scheiben Portionen erstellen und diese Portionen sodann verpacken zu können.

Insofern kann eine solche Presseinrichtung insbesondere als eine Komponente einer Verarbeitungslinie vorgesehen sein, so dass die mittels der Presseinrichtung komprimierten Produkte an weitere Verarbeitungsvorrichtungen überführt und dort weiterverarbeitet werden können. Diese weiteren Verarbeitungsvorrichtungen können sich beispielsweise entlang der Linie in Längsrichtung der Presskammer an die Presseinrichtung anschließen, so dass ein komprimiertes Produkt beispielsweise entlang der Längsrichtung aus der Presseinrichtung hinausgefördert und einer Aufschneidevorrichtung zugeführt werden kann, um von dieser in Scheiben geschnitten zu werden.

Insbesondere angesichts einer solchen häufigen Verwendung von Presseinrichtungen in einer Verarbeitungslinie ist es bei der Gestaltung einer solchen Presseinrichtung erforderlich, eine möglichst schmale Bauweise zu realisieren, um den häufig begrenzten Raumverhältnissen Rechnung tragen und einen komfortablen Zugang zu der Presseinrichtung und insbesondere der Presskammer zu ermöglichen. Jedoch kann eine gewisse Größe der Presseinrichtung und insbesondere eine gewisse Breite der Presseinrichtung bereits dadurch vorgegeben sein, dass das zumindest eine Pressmittel verfahrbar sein muss. Dazu muss an der Presseinrichtung auch der Antrieb angeordnet werden, wobei die Anordnung von Komponenten des Antriebs gegebenenfalls zu einer weiteren Vergrößerung der Presseinrichtung in der Verfahrrichtung des Pressmittels und insbesondere in der Breite der Presseinrichtung zur Folge haben kann. Um eine solche Vergrößerung zu minimieren, können Antriebe mit komplexen Umlenkungen vorgesehen sein, um beispielsweise eine von dem Antrieb generierte Linearbewegung quer zu einer Verfahrrichtung des Pressmittels umlenken zu können. Dies kann jedoch mit einer komplexen und daher teuren Ausbildung des Antriebs einhergehen, wobei die Umlenkungen zudem den Wirkungsgrad des Antriebs reduzieren können.

Es ist daher eine Aufgabe der Erfindung, eine Presseinrichtung zum Pressen von Fleischprodukten zu schaffen, deren Pressmittel mit einem insbesondere in Verfahrrichtung schmal bauenden Antrieb antreibbar ist.

Diese Aufgabe wird gelöst durch eine Presseinrichtung mit den Merkmalen des Anspruchs 1.

Der Antrieb der Presseinrichtung ist dazu ausgebildet, zum Verfahren des Pressmittels von der Startposition in die Endposition zumindest einen um eine Drehachse drehbaren Exzenter anzutreiben, wobei das Pressmittel durch eine Drehung des Exzenters von mehr als 90° aus der Startposition in die Endposition verfahrbar ist. Insbesondere kann es vorgesehen sein, dass das Pressmittel durch eine Drehung des Exzenters von mehr als 120° aus der Startposition in die Endposition verfahrbar ist. Darüber hinaus kann der Exzenter bei einigen Ausführungsformen durch eine Drehung um 180° aus der Startposition in die Endposition verfahrbar sein.

Insbesondere können die Startposition und die Endposition jeweilige Maximalpositionen des Pressmittels darstellen, wobei das Pressmittel in der Startposition am weitesten von dem Gegenelement entfernt und in der Endposition am weitesten auf das Gegenelement zu verfahren sein kann. Beispielsweise kann es vorgesehen sein, dass das Produkt in der Startposition des Pressmittels in die Presskammer einbringbar ist, während das Produkt in der Endposition des Pressmittels maximal komprimiert ist.

Indem das Pressmittel durch eine Drehung des Exzenters von mehr als 90° und insbesondere durch eine Drehung um 180° von einer Startposition in die Endposition verfahrbar ist, kann insbesondere ein möglichst großes Vielfaches der Exzentrizität des Exzenters genutzt werden, um das Pressmittel zu verfahren. Insbesondere bei einer Drehung um 180° kann das Pressmittel um die doppelte Exzentrizität verfahren werden, so dass eine verhältnismäßig große Verfahrstrecke bei einer lediglich vergleichsweise geringen Exzentrizität erreicht werden kann. Beispielsweise kann der Exzenter eine Exzentrizität von etwa 75 mm aufweisen, wobei durch eine Drehung des Exzenters um 180° eine Verfahrstrecke von 150 mm erreicht werden kann.

Indem somit die erforderlichen Verfahrstrecken bei lediglich geringer Exzentrizität des Exzenters erreicht werden können, muss der Antrieb ebenfalls lediglich geringe Drehmomente aufbringen, um eine bestimmte Kraft auf das Pressmittel aufbringen zu können. Insbesondere ist im Vergleich zu einem lediglich um maximal 90° drehbaren Exzenter bei einer Drehung um 180° das halbe Drehmoment aufzubringen, um bei gleicher Verfahrstrecke dieselbe Kraft aufbringen zu können.

Ferner ermöglicht es das Antreiben des Pressmittels durch einen Exzenter, den Exzenter unmittelbar durch einen drehenden Motor anzutreiben und die Drehung des Motors durch lediglich eine Übersetzung an dem Exzenter in die lineare Bewegung des Pressmittels umzusetzen. Auch weitere Übersetzungen zwischen linearen Bewegungen und Drehbewegungen, die zu einer Verringerung des Wirkungsgrads führen können, sind daher nicht erforderlich. Dies kann beispielsweise dadurch erreicht werden, dass der Exzenter unmittelbar durch einen drehenden Antrieb gedreht wird, ohne beispielsweise von einem eine Linearbewegung generierenden Hydraulikzylinder angetrieben zu werden. Bei einem solchen Antrieb eines Exzenters, indem beispielsweise eine mittels eines Hydraulikzylinders angetriebene Pleuelstange radial außen an einer Exzenterscheibe angreift, kann der Exzenter hingegen lediglich über einen verhältnismäßig geringen Winkelbereich angetrieben werden, in welchem die Pleuelstange annähernd tangential zu der Exzenterscheibe angeordnet ist. Eine Drehung des Exzenters um über 90° ist daher bei solchen Lösungen nicht möglich, so dass eine größere Exzentrizität des Exzenters zum Erreichen der gewünschten Verfahrstrecke des Pressmittels erforderlich ist.

Darüber hinaus ermöglicht das Antreiben des Pressmittels mittels eines um über 90° und insbesondere 180° drehbaren Exzenters und die damit verbundene geringe erforderliche Exzentrizität, verhältnismäßig einfache Getriebe mit lediglich geringen Übersetzungen einzusetzen, um die erforderliche Kraft zu generieren. Dadurch kann die Presseinrichtung insgesamt günstiger und einfacher ausgebildet werden. Beispielsweise kann der Exzenter, der insbesondere als eine Exzenterscheibe ausgebildet sein kann, über ein einfaches Planetengetriebe mit einem drehenden Motor verbunden sein, um die Verfahrbewegung des Pressmittels zu generieren.

Weitere Ausführungsformen sind den abhängigen Ansprüchen, der Beschreibung und den Zeichnungen zu entnehmen.

Bei einigen Ausführungsformen kann der Antrieb einen Elektromotor umfassen, welcher dazu ausgebildet ist, den Exzenter anzutreiben. Insbesondere kann der Elektromotor dazu ausgebildet sein, das Pressmittel durch Antreiben des Exzenters zu einer Drehung um mehr als 90°, insbesondere mehr als 120°, bevorzugt zu einer Drehung von 180°, von der Startposition in die Endposition zu verfahren.

Ein solcher Elektromotor kann insbesondere dazu ausgebildet sein, eine Motorwelle direkt zu einer Drehbewegung anzutreiben, wobei die Drehung dieser Motorwelle ohne eine vorherige Übersetzung in eine lineare Bewegung auf den Exzenter übertragen werden kann. Infolge solcher Umwandlungen zwischen Drehbewegungen und Linearbewegungen entstehende Verluste können durch einen solchen direkten Antrieb des Exzenters folglich vermieden werden. Zudem ermöglicht es der große Drehwinkel des Exzenters, den gesamten erforderlichen Verfahrweg des Pressmittels durch einen Exzenter mit einer verhältnismäßig geringen Exzentrizität zu erreichen, so dass die verhältnismäßig geringen Drehmomente auch mittels schnell drehender und klein bauender Elektromotoren generiert werden können. Dadurch kann wiederum eine insgesamt platzsparende Bauweise der Presseinrichtung erreicht werden.

Der Elektromotor kann bei einigen Ausführungsformen als Servomotor ausgebildet sein. Ein solcher Servomotor kann insbesondere eine präzise Prozesssteuerung ermöglichen, indem beispielsweise Positionen, in welche das Pressmittel während eines Pressens zu verfahren ist, präzise vorgegeben und mittels des Servomotors angesteuert werden können. Dabei kann der Servomotor insbesondere ein Bestandteil eines Servoantriebs zum Verfahren des Pressmittels sein, wobei der Servoantrieb zusätzlich zu dem Servomotor einen Servoumrichter mit Leistungselektronik und Regelung umfassen kann. Dadurch kann ein gezieltes Verfahren des Pressmittels ermöglicht werden, wobei der Servomotor insbesondere positionsgeregelt, momentengeregelt und/oder geschwindigkeitsgeregelt sein kann.

Bei einigen Ausführungsformen kann die Drehachse des Exzenters einer Motordrehachse entsprechen, um welche eine Motorwelle des Elektromotors drehbar ist. Alternativ dazu kann die Drehachse des Exzenters parallel zu der Motorachse ausgerichtet sein.

Indem die Drehachse des Exzenters einer Motorachse entsprechen kann, können der Elektromotor und der Exzenter insbesondere entlang der Drehachse des Exzenters angeordnet sein, um eine radial bezüglich der Drehachse schmale Bauweise des Antriebs für das Pressmittel realisieren zu können. Dabei kann die Drehachse des Exzenters der Motorachse beispielsweise entsprechen, wenn eine Drehung des Elektromotors unmittelbar auf den Exzenter geleitet wird. Die Drehachse des Exzenters kann jedoch insbesondere leicht gegenüber der Motordrehachse versetzt ausgerichtet sein, wenn der Exzenter beispielsweise über ein Getriebe mit dem Elektromotor gekoppelt ist. Auch bei einer solchen parallelen Ausrichtung können der Elektromotor und der Exzenter jedoch entlang der Drehachse ausgerichtet sein, so dass die Erstreckung des Antriebs sich im Wesentlichen auf die durch die Drehachse definierte Richtung konzentrieren kann.

Die Drehung der Motorwelle kann bei einigen Ausführungsformen ohne Umlenkung in eine translatorische Bewegung in eine Drehung des Exzenters überführbar sein. Wie bereits erläutert, kann dadurch insbesondere der Wirkungsgrad des Antriebs erhöht werden, indem die Drehung der Motorwelle, abgesehen von eventuellen Übersetzungsstufen, unmittelbar in eine Drehung des Exzenters übertragen werden kann. Etwaige Verluste, etwa aufgrund eines Antriebs des Exzenters durch einen eine lineare bzw. translatorische Bewegung generierenden Antrieb, können dadurch vermieden werden.

Der Exzenter kann bei einigen Ausführungsformen über ein Getriebe, insbesondere Untersetzungsgetriebe, mit dem Elektromotor verbunden sein. Bei einem Untersetzungsgetriebe kann es sich insbesondere um ein solches Getriebe handeln, bei welchem eine eingehende Drehzahl ins Langsame übersetzt ausgegeben wird. Bei dem Getriebe und insbesondere dem Untersetzungsgetriebe kann es sich beispielsweise um ein Planetengetriebe handeln.

Indem der Exzenter über ein solches Getriebe mit dem Elektromotor verbunden ist, kann insbesondere ein auf den Exzenter übertragenes Drehmoment erhöht werden, wozu eine Drehung der Motorwelle verlangsamt auf den Exzenter übertragen werden kann. Dies kann es beispielsweise ermöglichen, schnell drehende Elektromotoren zum Antreiben des Pressmittels einzusetzen, wobei jedoch aufgrund des verhältnismäßig kleinen mittels des Exzenters zu generierenden Drehmoments gleichsam verhältnismäßig wenig komplexe Getriebe eingesetzt werden können, um die erforderliche Untersetzung zu erreichen.

Dadurch kann eine insgesamt kostengünstige Ausbildung des Antriebs für das Pressmittel erreicht werden.

Das Getriebe kann bei einigen Ausführungsformen koaxial zu dem Elektromotor und dem Exzenter angeordnet sein. Insbesondere können der Elektromotor, das Getriebe und der Exzenter bei einigen Ausführungsformen bezüglich der Drehachse hintereinander angeordnet sein. Im Hinblick auf eine koaxiale Anordnung des Getriebes, des Elektromotors und des Exzenters kann das Getriebe insbesondere koaxial zu einer Motorwelle des Elektromotors und einem Mittelpunkt einer Exzenterscheibe angeordnet sein. Der Elektromotor, das Getriebe und der Exzenter können ferner entlang der Drehachse des Exzenters hintereinander angeordnet sein. Wie bereits erläutert, kann sich der Antrieb durch eine solche Anordnung vornehmlich entlang der Drehachse des Exzenters und/oder des Elektromotors erstrecken, um den erforderlichen Bauraum radial bezüglich dieser Drehachse zu minimieren.

Bei einigen Ausführungsformen kann der Exzenter über ein Gleitelement mit dem Pressmittel verbunden sein, wobei das Gleitelement dazu ausgebildet sein kann, während des Verfahrens des Pressmittels quer zu der Pressrichtung an dem Pressmittel abzugleiten.

Indem der Exzenter eine Drehbewegung ausführt, um das Pressmittel linear zu verfahren, bewegt sich der Exzenter bzw. ein Angriffspunkt des Exzenters an dem Pressmittel während des Verfahrens quer zu der Pressrichtung relativ zu dem Pressmittel. Um eine solche Bewegung zu ermöglichen, kann der Exzenter über ein Gleitelement mit dem Pressmittel verbunden sein, welches in Pressrichtung mit dem Pressmittel verfahrbar, jedoch quer zu der Pressrichtung relativ zu dem Pressmittel bewegbar sein kann. Dadurch kann verhindert werden, dass das Pressmittel während einer Drehung des Exzenters quer zu der Pressrichtung ausgelenkt wird.

Der Exzenter kann das Pressmittel bei einigen Ausführungsformen direkt mechanisch kontaktieren. Durch einen solchen direkten mechanischen Kontakt zwischen dem Exzenter und dem Pressmittel kann die Drehung des Exzenters wiederum unmittelbar in eine translatorische oder lineare Bewegung des Pressmittels zum Pressen des Produkts umgesetzt werden. Weitere Übersetzungsstufen, die zu einer Verringerung des Wirkungsgrads führen können, sind daher nicht erforderlich. Gegebenenfalls kann an dem Exzenter jedoch ein Gleitelement befestigt sein, welches dazu ausgebildet ist, während des Verfahrens des Pressmittels quer zu der Pressrichtung an dem Pressmittel abzugleiten, wie vorstehend erläutert ist. Zudem kann der Exzenter über eine Koppelstange an dem Pressmittel angreifen, wie nachstehend noch beschrieben ist.

Der Exzenter kann bei einigen Ausführungsformen eine Exzentrizität in einem Bereich von 50 mm bis 100 mm, insbesondere in einem Bereich von 70 mm bis 80 mm aufweisen. Insbesondere bei einer Drehung des Exzenters um 180° kann bereits mit solch geringer Exzentrizität ein ausreichender Verfahrweg für das Pressmittel zurückgelegt werden, um die im Bereich der Verarbeitung von Fleischprodukten erforderlichen Komprimierungen erreichen zu können.

Die Drehachse des Exzenters kann bei einigen Ausführungsformen senkrecht zu der Pressrichtung ausgerichtet sein. Alternativ oder zusätzlich kann die Drehachse bei einigen Ausführungsformen senkrecht zu der Längsrichtung ausgerichtet sein.

Beispielsweise kann der Antrieb dazu vorgesehen sein, ein quer und insbesondere senkrecht zu der Längsrichtung verfahrbares Pressmittel anzutreiben. Ein solches quer zur Längsrichtung verfahrbares Pressmittel kann insbesondere während eines Pressvorgangs zuerst verfahren werden, so dass die von diesem Pressmittel aufzubringen Presskräfte verhältnismäßig gering sein können, da das Produkt beispielsweise in Längsrichtung ausweichen und sich ausdehnen kann. Der Exzenter kann jedoch beispielsweise in der Endposition entlang der Pressrichtung ausgerichtet sein, so dass in der Folge, beispielsweise während eines Verfahrens weiterer Pressmittel, auf das Produkt aufgebrachte Kräfte kein Drehmoment auf den Exzenter entfalten und das Pressmittel auch diesen erhöhten Kräften widerstehen kann. Ferner kann dadurch, dass die Drehachse senkrecht zu der Pressrichtung ausgerichtet sein kann, der für den Antrieb in Pressrichtung erforderliche Bauraum minimiert werden. Insbesondere bei einem quer zu der Längsrichtung verfahrbaren Pressmittel kann dadurch die Erstreckung der Presseinrichtung quer oder senkrecht zu der Längsrichtung insgesamt minimiert werden.

Die Drehachse des Exzenters kann bei einigen Ausführungsformen entlang der Vertikalen ausgerichtet sein. Durch eine solche Drehachse des Exzenters kann insbesondere bei Ausführungsformen, bei welchen auch ein den Exzenter antreibender Elektromotor koaxial zum Exzenter angeordnet ist, der Elektromotor und gegebenenfalls ein Getriebe entlang der Vertikalen ausgerichtet sein. Insbesondere können ein solches Getriebe und der Elektromotor entlang der Vertikalen unterhalb des Exzenters angeordnet sein, so dass der Antrieb des Pressmittels insgesamt unter dem Exzenter angeordnet sein kann. Indem die Drehachse ferner insbesondere senkrecht zu der Pressrichtung ausgerichtet sein kann, um eine Übertragung einer Drehung des Exzenters in eine in Pressrichtung erfolgende Verfahrbewegung des Pressmittels übersetzen zu können, kann der zum Generieren der Verfahrbewegung des Pressmittels erforderliche Antrieb somit gewissermaßen unterhalb des Exzenters und/oder des Pressmittels verstaut werden. Indem die Presseinrichtung jedoch ohnehin eine gewisse Höhe aufweisen muss, um eine komfortable Bedienung zu ermöglichen, kann dieser somit gleichsam ohnehin erforderliche Raum genutzt werden, um dort den Antrieb anzuordnen. Hingegen bedingt die Anordnung des Antriebs keine oder jedenfalls lediglich eine minimale Vergrößerung der Presseinrichtung in der Horizontalen und/oder in Pressrichtung.

Der Antrieb kann bei einigen Ausführungsformen von dem Pressmittel gehalten sein. Insbesondere kann sich der Antrieb bei einigen Ausführungsformen unterhalb des Pressmittels erstrecken und von dem Pressmittel gehalten sein. Der Antrieb kann somit beispielsweise nicht an einer Unterseite an einem Gehäuse der Presseinrichtung abgestützt sein, sondern gewissermaßen oberhalb eines solchen Gehäusebodens hängen.

Bei einigen Ausführungsformen kann der Antrieb über eine Drehmomentstütze an einem Gehäuse der Presseinrichtung abgestützt sein. Insbesondere kann eine solche Drehmomentstütze in einem Gehäuse und in einem Getriebe des Antriebs abgestützt sein. Der Antrieb kann ferner bei einigen Ausführungsformen lediglich mittels der Drehmomentstütze an dem Gehäuse befestigt sein.

Indem der Antrieb lediglich mit der Drehmomentstütze an dem Gehäuse befestigt sein kann, kann insbesondere ein Toleranzausgleich, beispielsweise zwischen Lagern eines Getriebes des Exzenters und/oder eines Elektromotors, ermöglicht werden, indem diese Bauteile geringfügig gegeneinander ausgelenkt werden können. Etwaige, während des Pressens auf den Antrieb wirkende Drehmomente aufgrund einer von dem Produkt dem Pressen entgegenwirkenden Kraft können jedoch über die Drehmomentstütze auf das Gehäuse abgeleitet werden, um einer Beschädigung des Antriebs entgegenzuwirken.

Der Exzenter kann bei einigen Ausführungsformen mittig an dem Pressmittel angreifen. Hierdurch können etwaige Drehmomente möglichst vermieden werden.

Der Exzenter ist erfindungsgemäß über eine Koppelstange mit einem weiteren Exzenter verbunden, wobei der Exzenter und der weitere Exzenter an quer zu der Pressrichtung beabstandeten Angriffspunkten an dem Pressmittel angreifen. Insbesondere kann es eine solche Koppelstange ermöglichen, von dem Produkt während eines Pressvorgangs auf das Pressmittel übertragene Gegenkräfte aufzunehmen und einen Drehmomentausgleich zu ermöglichen, um eine ungewünschte Auslenkung des Pressmittel quer zu der Pressrichtung zu verhindern. Gewissermaßen kann das Pressmittel durch die beiden Exzenter an zwei beabstandeten Angriffspunkten vorgeschoben und dadurch hinsichtlich Auslenkungen quer zu der Pressrichtung stabilisiert werden.

Bei einigen Ausführungsformen kann der Antrieb dazu ausgebildet sein, den weiteren Exzenter anzutreiben. Insbesondere können somit sowohl der Exzenter als auch der weitere Exzenter mittels des gemeinsamen Antriebs antreibbar sein, so dass der Antrieb dazu ausgebildet sein kann, an beiden Angriffspunkten Kraft auf das Pressmittel zu übertragen. Es sind folglich keine gesonderten Antriebe zum Antreiben der beiden Exzenter erforderlich, so dass die Anzahl der erforderlichen Bauteile und entsprechend der erforderliche Bauraum minimiert werden können. Insbesondere kann der bereits genannte Elektromotor dazu ausgebildet sein, den Exzenter sowie den weiteren Exzenter anzutreiben. Zum Antreiben beider Exzenter und somit zum Übertragen von Kraft an beiden Angriffspunkten kann somit ein einziger Elektromotor vorgesehen sein.

Der weitere Exzenter kann bei einigen Ausführungsformen um eine Drehachse drehbar sein, die parallel zu der Drehachse des Exzenters ausgerichtet ist. Ferner können der Exzenter und der weitere Exzenter grundsätzlich gleich ausgebildet sein. Insofern kann an den beiden Angriffspunkten durch gemeinsames Drehen des Exzenters und des weiteren Exzenters eine grundsätzlich gleiche Bewegung und/oder Kraft auf das Pressmittel übertragen werden, so dass die Auslenkung des Pressmittels quer zu der Pressrichtung vermieden werden können.

Bei einigen Ausführungsformen kann eine Exzentrizität des Exzenters einer Exzentrizität des weiteren Exzenter entsprechen. Insbesondere können somit beide Angriffspunkte, an welchen die Exzenter an dem Pressmittel angreifen, um denselben Verfahrweg bewegbar sein, wenn der Exzenter und der weitere Exzenter verdreht werden.

Ferner können der Exzenter und der weitere Exzenter parallel zueinander ausgerichtet sein. Eine Ausrichtung des weiteren Exzenters kann insofern in jeder Drehstellung während des Verfahrens des Pressmittels einer Ausrichtung des Exzenters entsprechen. Zudem kann der weitere Exzenter während eines Verfahrens des Pressmittels von der Startposition in die Endposition um denselben Drehwinkel verdrehbar sein wie der Exzenter.

Bei einigen Ausführungsformen kann koaxial zu dem Exzenter ein unterer Exzenter angeordnet sein, wobei der Antrieb dazu ausgebildet sein kann, den unteren Exzenter anzutreiben. Insbesondere kann der untere Exzenter zwischen dem Exzenter und einem Elektromotor zum Antreiben des Exzenters und des unteren Exzenters angeordnet sein. Insofern ist der Begriff unter hier allgemein auf die Drehachse zu beziehen. Insbesondere bei einer vertikalen Ausrichtung der Drehachse des Exzenters kann der untere Exzenter jedoch auch vertikal unter dem Exzenter angerordnet sein.

Der untere Exzenter kann bei einigen Ausführungsformen um 90° versetzt zu dem Exzenter ausgerichtet sein. Insbesondere kann der untere Exzenter daher beispielsweise in einer Drehstellung des Exzenters, in welcher der Exzenter parallel zu der Pressrichtung ausgerichtet ist, um 90° zu der Pressrichtung versetzt ausgerichtet sein. Dies kann insbesondere eine zuverlässige Kompensation von während des Pressvorgangs auf das Pressmittel übertragenen Drehmomenten ermöglichen, so wie nachstehend noch erläutert ist.

Der untere Exzenter kann bei einigen Ausführungsformen über eine weitere Koppelstange mit einem weiteren unteren Exzenter verbunden sein, wobei der weitere untere Exzenter koaxial und um 90° versetzt zu dem weiteren Exzenter ausgerichtet sein kann.

Indem somit der Exzenter über eine Koppelstange mit einem weiteren Exzenter und der untere Exzenter über eine weitere Koppelstange mit einem weiteren unteren Exzenter verbunden sein können, können jeweilige auf das Pressmittel und somit die Koppelstange und die weitere Koppelstange übertragene Drehmomente über die Koppelstange und die weitere Koppelstange auf die jeweiligen Exzenter übertragen und dadurch kompensiert werden. Durch die um 90° versetzte Ausrichtung des unteren Exzenters zu dem Exzenter und des weiteren unteren Exzenters zu dem weiteren Exzenter kann ferner erreicht werden, dass in einer Stellung, in welcher der Exzenter und der weitere Exzenter parallel zu der Koppelstange ausgerichtet sind und keine Drehmomente über die Koppelstange zwischen dem Exzenter und dem weiteren Exzenter verteilt werden können, der untere Exzenter und der weitere untere Exzenter gerade senkrecht zu der weiteren Koppelstange stehen, so dass über die weitere Koppelstange ein Ausgleich von Drehmomenten zuverlässig erfolgen kann. Insofern kann durch eine solche Ausbildung der Presseinrichtung mit zwei jeweiligen Exzenterpaaren, die um 90° versetzt zueinander angeordnet sind, in jeder Stellung des Pressmittels ein zuverlässiger Drehmomentausgleich erfolgen, um eine ungewünschte Auslenkung des Pressmittels zu verhindern.

Die weitere Koppelstange kann bei einigen Ausführungsformen gekrümmt ausgebildet sein. Eine solche gekrümmte Ausbildung kann es insbesondere ermöglichen, die Koppelstange während einer Drehung des unteren Exzenters und des weiteren unteren Exzenters um eine sich zu dem Exzenter und dem weiteren Exzenter erstreckende jeweilige Welle herum zu führen.

Die Pressrichtung kann bei einigen Ausführungsformen senkrecht zu der Längsrichtung ausgerichtet sein. Insbesondere kann das mittels des Exzenters antreibbare Pressmittel somit dazu vorgesehen sein, das in die Presskammer eingebrachte Produkt senkrecht zu der Längsrichtung zu komprimieren. Ein solches Pressmittel kann insbesondere auch als Breitenstempel oder Querstempel bezeichnet werden. Die Längsrichtung kann ferner grundsätzlich entlang der Richtung verlaufen, in welcher die Presskammer die größte Erstreckung aufweist. Eine schmale Bauweise des Antriebs ermöglicht somit insbesondere bei einer Ausbildung zum Verfahren eines Pressmittels senkrecht zu der Längsrichtung auch eine schmale Ausbildung der Presseinrichtung insgesamt senkrecht zu der Längsrichtung.

Bei einigen Ausführungsformen kann das Pressmittel einen Schlitten umfassen, wobei der Schlitten in der Startposition oberhalb des Exzenters angeordnet sein kann. Der Schlitten kann somit gewissermaßen ein Gehäuse für den Exzenter bilden und den Exzenter überdecken. Auch dies kann eine kompakte Anordnung sowie einen direkten Angriff des Exzenters an dem Pressmittel bzw. dem Schlitten ermöglichen.

Der Exzenter kann bei einigen Ausführungsformen in der Endposition des Pressmittels ohne einen Ausbau des Schlittens für eine Reinigung zugänglich sein. Insbesondere kann der Exzenter in der Endposition ohne einen Ausbau von Komponenten, insbesondere verfahrbaren Komponenten, des Pressmittels für eine Reinigung zugänglich sein.

Bei solchen Ausführungsformen muss der Schlitten somit nicht entnommen werden, um den Exzenter oder den Antrieb reinigen zu können. Auch etwaige Wartungsarbeiten an dem Exzenter und/oder dem Antrieb können erfolgen, ohne dass der Schlitten entnommen werden muss. Dies kann eine deutliche Vereinfachung solcher Arbeiten darstellen, da der Schlitten eines solchen Pressmittels häufig etwa 100 kg wiegen kann, so dass eine manuelle Entnahme nicht möglich ist.

Die Presseinrichtung kann bei einigen Ausführungsformen eine Schutzabdeckung für den Schlitten umfassen, wobei die Schutzabdeckung werkzeuglos entnehmbar sein kann. Die Schutzabdeckung kann insbesondere dazu vorgesehen sein, den Schlitten zu überdecken und beispielsweise vor einer Kontamination zu schützen, wenn ein Produkt über das Pressmittel in die Presskammer eingebracht wird. Indem die Schutzabdeckung werkzeuglos entnehmbar sein kann, kann jedoch insbesondere ein Zugang auf dem beispielsweise unterhalb des Schlittens angeordneten Exzenter ermöglicht werden, um diesen und/oder den Antrieb warten und/oder reinigen zu können. Zudem kann die Schutzabdeckung dazu vorgesehen sein, einen manuellen Eingriff zu dem Pressmittel, insbesondere im Bereich der Startposition, und dadurch mögliche Verletzungen eines Benutzers zu verhindern.

Die Schutzabdeckung kann bei einigen Ausführungsformen an einem Gehäuse der Presseinrichtung fixiert sein, wobei das Pressmittel in Pressrichtung aus der Schutzabdeckung herausfahrbar sein kann. Insbesondere kann die Schutzabdeckung somit während eines Pressvorgangs nicht verschoben werden.

Die Schutzabdeckung kann bei einigen Ausführungsformen relativ zu dem Pressmittel verschwenkbar sein. Insbesondere kann die Schutzabdeckung relativ zu dem Pressmittel verschwenkbar sein, um einen Zugriff auf das Pressmittel, den Exzenter und/oder den Antrieb zu ermöglichen, um die genannten Komponenten warten und/oder reinigen zu können. Die Schutzabdeckung kann dazu beispielsweise um eine horizontal ausgerichtete Schwenkachse verschwenkbar sein.

Bei einigen Ausführungsformen kann die Schutzabdeckung in einer Entnahmestellung aus der Presseinrichtung entnehmbar sein, insbesondere durch Schieben. Beispielsweise kann es vorgesehen sein, dass die Schutzabdeckung mittels eines Stifts in einem Gehäuse der Presseinrichtung gehalten ist, jedoch um diesen Stift verschwenkbar ist. Während eines Pressvorgangs kann die Schutzabdeckung das Pressmittel abdecken und mit einer Lasche, durch welche der Stift hindurchgreift, ein Sicherungsmittel hintergreifen, um zwischen einer Befestigung des Stifts an dem Gehäuse und dem Sicherungsmittel eingeklemmt zu sein. Durch Schwenken der Schutzabdeckung um 90° kann die Lasche hingegen in eine Position überführbar sein, in welcher die Lasche außer Flucht zu dem Sicherungselement angeordnet ist, so dass die Schutzabdeckung durch Schieben von dem Stift weg über das Sicherungselement geschoben und von der Presseinrichtung gelöst werden kann. Ein solches Entnehmen kann den Zugriff auf die von der Schutzabdeckung während des Pressens verdeckten Komponenten, insbesondere das Pressmittel, den Exzenter und/oder den Antrieb, weiter erleichtern. Zudem kann die Schutzabdeckung werkzeuglos aus der Presseinrichtung entnehmbar sein und werkzeuglos wieder in die Presseinrichtung einsetzbar sein.

Die Schutzabdeckung kann bei einigen Ausführungsformen eine Sicherheitsschaltung umfassen, welche dazu ausgebildet ist, zu erfassen, wenn die Schutzabdeckung das Pressmittel abdeckt. Insbesondere kann durch eine solche Sicherheitsschaltung sichergestellt werden, dass die Schutzabdeckung vor dem Beginn eines Pressvorgangs korrekt angeordnet ist, um etwaige Verletzungen eines Nutzers bei einem Zugriff auf das Pressmittel zu verhindern. Die Sicherheitsschaltung kann insofern insbesondere einen Endpunkt einer Schwenkbewegung detektieren, durch welche die Schutzabdeckung relativ zu dem Pressmittel bewegbar sein kann.

Bei einigen Ausführungsformen kann die Presseinrichtung ferner eine seitliche Führung für das Pressmittel umfassen. Insbesondere kann die Presseinrichtung seitliche Führungsstangen für das Pressmittel umfassen. Die seitliche Führung und/oder die seitlichen Führungsstangen können quer zu der Pressrichtung beabstandet sein und sich entlang der Pressrichtung erstrecken, um eine zuverlässige Führung des Pressmittels während des Pressvorgangs zu ermöglichen. Die bereits genannten Möglichkeiten, etwaige auf das Pressmittel wirkende Drehmomente aufzunehmen, können insbesondere auch dazu dienen, eine Belastung solcher seitlicher Führungen und/oder Führungsstangen zu verhindern.

Bei einigen Ausführungsformen kann mittels des Antriebs eine Kraft von weniger als 2 kN und/oder mehr als 0,8 kN auf das Pressmittel übertragbar sein. Insbesondere kann eine solche Kraft ausreichen, um zum Pressen eines Fleischprodukts, insbesondere eines gefrorenen oder angefrorenen Fleischprodukts, ein zuerst zu verfahrendes Pressmittel zu verfahren und eine Komprimierung insbesondere quer zu einer Längsrichtung zu erreichen. Durch eine Ausrichtung des Exzenters in der Endposition beispielsweise entlang der Pressrichtung können während eines darauffolgenden Pressens in weiteren Richtungen jedoch keine radialen Kräfte auf den Exzenter übertragen werden, so dass der Exzenter und der Antrieb solchen Presskräften in dieser Stellung widerstehen können.

Ferner kann das Pressmittel bei einigen Ausführungsformen ein mit dem Schlitten koppelbares Presswerkzeug umfassen, wobei das Presswerkzeug insbesondere werkzeuglos mit dem Schlitten verbindbar und/oder von dem Schlitten lösbar sein kann. Beispielsweise kann das Presswerkzeug durch eine Steckverbindung mit dem Schlitten verbindbar sein.

Indem das Pressmittel ein mit dem Schlitten koppelbares Presswerkzeug aufweisen kann, kann insbesondere ein Abstand zwischen dem Gegenelement und dem Pressmittel angepasst werden, um beispielsweise verschieden große Produkte in der Presseinrichtung verarbeiten zu können. Hierbei kann durch die Möglichkeit, das Presswerkzeug werkzeuglos zu entnehmen und/oder einzusetzen, flexibel auf verschiedene Produktanforderungen reagiert werden. Die Größe des Presswerkzeugs entlang der Pressrichtung kann insbesondere eine Größe des fertiggepressten Produkts in Pressrichtung definieren, so dass durch jeweilige Presswerkzeuge unterschiedliche Resultate erreicht werden können. Insbesondere kann durch ein solches Pressen eine Anpassung an eine nachgelagerte Verpackungsmaschine erfolgen, die beispielsweise Verpackungsplätze einer vorgegebenen Größe bereitstellen kann, in welche die gepressten Produkte und/oder weitere Verarbeitungen der gepressten Produkte, beispielsweise abgeschnittene Scheiben, eingelegt werden können. Zudem können verschiedene Presswerkzeuge mit der Presseinrichtung verbindbar sein, um beispielsweise eine gewünschte Form des komprimierten Produkts, beispielsweise eine abgerundete Form, erreichen zu können.

Die Erfindung bezieht sich ferner auf eine Presseinrichtung zum Pressen von Fleischprodukten, insbesondere gefrorenen und/oder angefrorenen Fleischprodukten, bevorzugt Frischfleischprodukten und/oder Bacon, mit einer sich entlang einer Längsrichtung erstreckenden Presskammer, in welcher ein zu pressendes Produkt einbringbar ist. Die Presskammer umfasst dabei zumindest ein Gegenelement und ein zum Komprimieren des Produkts in Richtung des Gegenelements verfahrbares Presswerkzeug, wobei das Presswerkzeug werkzeuglos aus der Presskammer entnehmbar und/oder die Presskammer einsetzbar ist. Wie bereits erläutert, kann durch ein solches werkzeugloses Entnehmen die Presseinrichtung auf einfache Weise flexibel an verschiedene zu verarbeitende Produkte angepasst werden. Beispielsweise können verschieden geformte Presswerkzeuge in die Presskammer eingesetzt werden, um auf eine Form des komprimierten Produkts einwirken zu können. Zudem kann beispielsweise durch eine entsprechend gewählte Erstreckung des Presswerkzeugs in einer Pressrichtung, in welcher das Presswerkzeug verfahrbar ist, auf eine Größe des komprimierten Produkts eingewirkt werden.

Das Presswerkzeug kann bei einigen Ausführungsformen werkzeuglos mit einem verfahrbaren Schlitten verbindbar sein. Insofern kann der Schlitten ein grundsätzlich in der Presseinrichtung verbleibendes Bauteil darstellen, mit welchem das Presswerkzeug flexibel koppelbar sein kann.

Das Presswerkzeug kann bei einigen Ausführungsformen eine Kennzeichnung aufweisen, anhand welcher das Presswerkzeug identifizierbar ist. Beispielsweise kann das Presswerkzeug eine Beschriftung und/oder eine Codierung aufweisen, um das jeweilige Presswerkzeug zu identifizieren. Anhand der Kennzeichnung kann beispielsweise eine Erstreckung des Presswerkzeugs in Pressrichtung, eine Form, ein Gewicht und/oder eine Art, beispielsweise eine Seriennummer, des Presswerkzeugs identifizierbar sein.

Die Presseinrichtung kann bei einigen Ausführungsformen mehrere wahlweise in die Presskammer einsetzbare Presswerkzeuge umfassen, wobei jedes der Presswerkzeuge eine individuelle Kennzeichnung aufweisen kann. Insofern können in die Presseinrichtung flexibel verschiedene Presswerkzeuge eingesetzt werden, um ein gewünschtes Resultat des Pressvorgangs zu erreichen. Indem jedes der Presswerkzeuge eine individuelle Kennzeichnung aufweisen kann, kann überprüft werden, welches Presswerkzeug momentan in die Presseinrichtung eingesetzt ist, um den Pressvorgang gegebenenfalls entsprechend ansteuern zu können. Beispielsweise können verschiedene Endpositionen für verschiedene Presswerkzeuge und/oder verschiedene Presskräfte vorgesehen sein.

Die Presseinrichtung kann bei einigen Ausführungsformen eine Ausleseeinrichtung aufweisen, welche dazu ausgebildet ist, die Kennzeichnung auszulesen. Dazu kann beispielsweise jedes der Presswerkzeuge mit einem RFID-Chip ausgebildet sein, wobei die Ausleseeinrichtung dazu ausgebildet sein kann, einen solchen RFID-Chip auszulesen. Indem die Presseinrichtung eine Ausleseeinrichtung aufweist, welche die Kennzeichnung auslesen kann, kann der Presseinrichtung auch eine Information übermittelt werden, welches Presswerkzeug momentan eingesetzt ist. Dies ermöglicht es, einem Benutzer beispielsweise Informationen über vorzunehmende Einstellungen und/oder Steuerungen des Pressvorgangs anzuzeigen oder solche Einstellungen und/oder Ansteuerungen automatisch vorzunehmen.

Bei einigen Ausführungsformen kann die Ausleseeinrichtung mit einer Steuereinrichtung verbunden sein, wobei die Steuereinrichtung dazu ausgebildet sein kann, einen Pressvorgang in Abhängigkeit von der ausgelesenen Kennzeichnung anzupassen. Beispielsweise können die Ausleseeinrichtung und/oder die Steuereinrichtung dazu ausgebildet sein, das jeweilige Werkzeug anhand der Kennzeichnung zu identifizieren, so dass die Steuereinrichtung das jeweilige eingesetzte Presswerkzeug berücksichtigen kann und den Pressvorgang daran angepasst durchführen kann. Insofern kann eine optimal angepasste Steuerung automatisch erfolgen und etwaige Fehleinstellungen können vermieden werden. Die Steuereinrichtung kann beispielsweise einen Mikroprozessor, einen Mikrochip und/oder eine CPU umfassen.

Was mögliche Dimensionierungen der Presseinrichtung betrifft, insbesondere gemäß der vorstehend erläuterten möglichen Ausführungsformen und/oder gemäß des nachstehend anhand der Figuren näher beschriebenen Ausführungsbeispiels, so kann die Presseinrichtung eine oder mehrere der folgenden Merkmale aufweisen, wobei diese Merkmale, sofern nichts anderes erwähnt ist, insbesondere bei solche Ausführungsformen einer Presseinrichtung verwirklicht sein können, die zum Pressen von Bacon dienen:

Die Presseinrichtung kann für maximale Produktabmessungen mit einer sich senkrecht zur Längsrichtung erstreckenden Produktbreite von etwa 350mm, einer parallel zur Längsrichtung verlaufenden Produktlänge von etwa 800mm und einer Produkthöhe von etwa 150mm ausgeführt sein.

Was die äußeren Abmessungen der Presseinrichtung betrifft, so kann diese eine Breite von etwa 100cm und eine Länge von etwa 270cm aufweisen. Eine Breite von etwa 100cm, was vergleichsweise schmal ist, kann insbesondere durch die hierin offenbarte Art und Weise des Antriebs für das in Richtung der Breite verfahrbare Pressmittel erreicht werden und kann auch in anderer, insbesondere ästhetischer Hinsicht von Vorteil sein, nämlich insbesondere dann, wenn andere Komponenten einer Verarbeitungslinie zumindest ungefähr die gleiche Breite aufweisen. Bekannte Bacon-Slicer beispielsweise besitzen ebenfalls eine Breite von etwa 100cm, so dass sich die hierin offenbarte Presseinrichtung in eine entsprechende Verarbeitungslinie optimal einpassen kann. Die Presseinrichtung kann auch mit einer Breite von bis zu etwa 130cm bis 140cm realisiert werden, um breitere Produkte komprimieren zu können, wie es etwa für das Komprimieren von Bacon auf dem US-Markt erforderlich sein kann. Eine Länge von 270cm ist im Vergleich zu bekannten Presseinrichtungen mit ähnlichen Leistungen und für ähnliche Anwendungen relativ gering, womit Platz in Längsrichtung eingespart werden kann. Die Beladehöhe, also diejenige Höhe, in welche ein Benutzer ein zu komprimierendes Produkt mindestens anheben muss, um es in die Presskammer der Presseinrichtung einzubringen, kann im Bereich von etwa 100cm bis 120cm über dem Boden liegen, insbesondere je nach Einstellung von in der Höhe verstellbaren Standfüßen, mit denen die Presseinrichtung auf dem Boden steht. Auch diese relativ niedrige, ergonomisch günstige und für den Benutzer somit entlastende Beladehöhe kann durch die hierin offenbarte Art und Weise des Antriebs für das in Richtung der Breite verfahrbare Pressmittel erreicht werden. Diese Beladehöhe kann durch die Oberseite einer insbesondere verschwenkbaren und/oder entnehmbaren Schutzabdeckung für das in Richtung der Breite verfahrbare Pressmittel definiert sein, wenn das Beladen über diese Schutzabdeckung hinweg erfolgt.

Die Pressmittel für das Komprimieren der Produkte in den unterschiedlichen Richtungen können so ausgelegt sein, dass sie dauerhaft maximalen Belastungen widerstehen können wie folgt: Komprimieren in vertikaler Richtung: etwa 25 Tonnen, entspricht also etwa einer Kraft von 250kN; Komprimieren in Längsrichtung: etwa 4 Tonnen, entspricht also etwas einer Kraft von 40kN; Komprimieren in Breitenrichtung, also senkrecht zur Längsrichtung: etwa 8 Tonnen, entspricht also etwa einer Kraft von 80kN.

Die Erfindung wird im Folgenden rein beispielhaft anhand eines Ausführungsbeispiels unter Bezugnahme auf die Zeichnungen erläutert.

Es zeigen:
- Fig. 1 A bis 1D: eine jeweilige perspektivische Ansicht einer Presseinrichtung zum Pressen von Fleischprodukten, wobei in den Fig. 1C und 1D einige Komponenten der Presseinrichtung entnommen sind,
- Fig. 2A bis 2C: eine perspektivische Rückansicht und eine perspektivische Vorderansicht auf einen Eingang zu einer Presskammer der Presseinrichtung sowie eine detaillierte Oberansicht zur Veranschaulichung einer Einkapselung von Komponenten einer Eingangskontrolleinrichtung,
- Fig. 3A und 3B: eine jeweilige schematische Darstellung der Presseinrichtung mit geöffnetem Gehäuse,
- Fig. 4A und 4B: eine perspektivische Darstellung eines in einer Pressrichtung verfahrbaren Pressmittels, für welches eine Schutzabdeckung vorgesehen ist, bei geschlossener und bei geöffneter Schutzabdeckung,
- Fig. 5A bis 5C: eine Seitenansicht des Pressmittels sowie zwei Detailansichten der Schutzabdeckung zur Veranschaulichung der Möglichkeit einer werkzeuglosen Entnahme der Schutzabdeckung,
- Fig. 6A und 6B: eine jeweilige perspektivische Ansicht des Pressmittels in einer Startposition, in welcher ein Produkt in die Presskammer der Presseinrichtung einbringbar ist, und einer Endposition, in welcher das in die Presskammer eingebrachte Produkt komprimiert ist,
- Fig. 7A und 7B: eine jeweilige schematische Darstellung eines Antriebs des Pressmittels bei einer Positionierung in der Startposition und einer Positionierung in der Endposition und
- Fig. 8A und 8B: eine Draufsicht auf den Antrieb in der Startposition des Pressmittels und in der Endposition des Pressmittels.

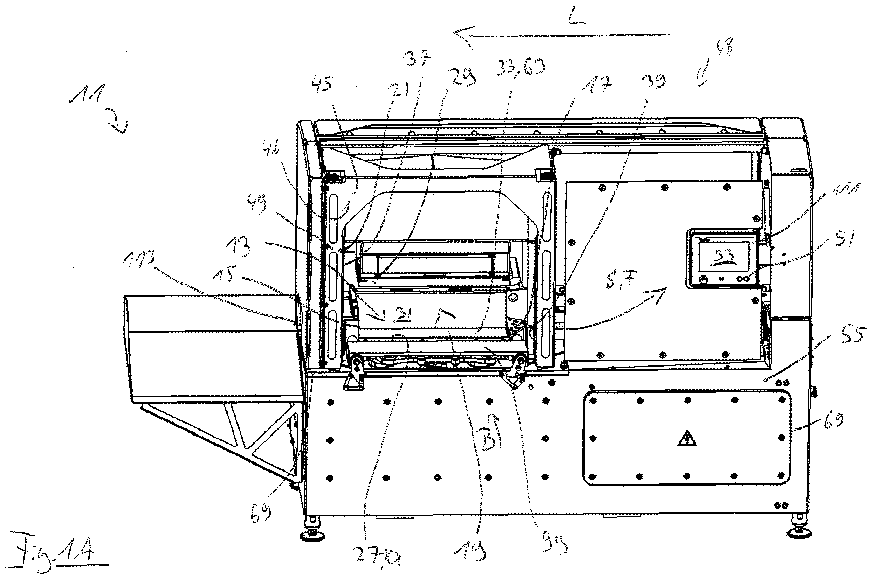

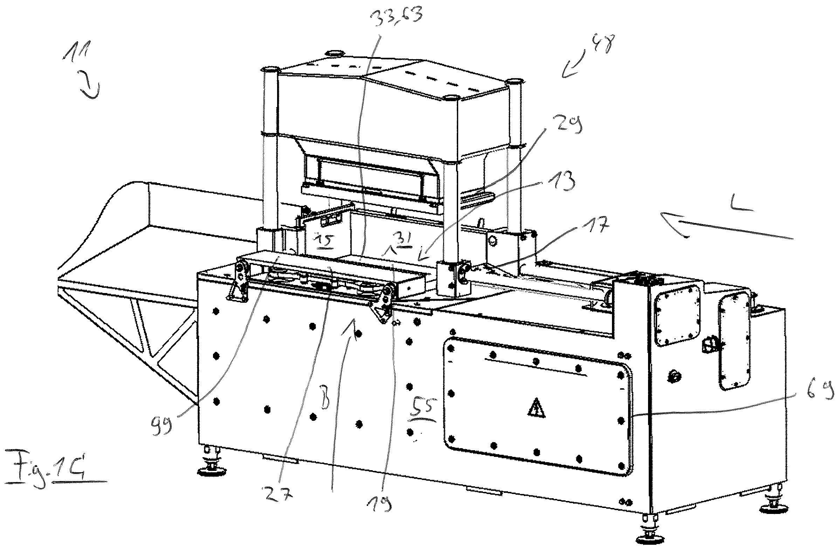

Die Fig. 1A bis 1D zeigen eine Presseinrichtung 11 zum Pressen von Fleischprodukten, wobei die Presseinrichtung 11 insbesondere zum Pressen von gefrorenen und/oder angefrorenen Fleischprodukten, beispielsweise Frischfleischprodukten und/oder Bacon, vorgesehen sein kann. Die Presseinrichtung 11 weist eine sich entlang einer Längsrichtung L erstreckende Presskammer 13 auf, in welche zu pressende Produkte entlang einer Einbringrichtung B durch einen Eingang 19 einbringbar sind. Bei der hier veranschaulichten Presseinrichtung 11 ist eine manuelle Beladung bzw. ein manuelles Einbringen von Produkten in die Presskammer 13 vorgesehen, so dass ein Benutzer durch den Eingang 19 hindurchgreifen und das Produkt auf einer Pressebene 63 in der Presskammer 13 ablegen kann.

Die Presskammer 13 umfasst ein erstes Pressmittel 17, welches dazu ausgebildet ist, entlang der Längsrichtung L auf ein erstes Gegenelement 15 zu verfahren zu werden, um ein in die Presskammer 13 eingebrachtes Produkt dadurch in Längsrichtung zu komprimieren. Ferner umfasst die Presskammer 13 ein zweites Pressmittel 27, welches dazu ausgebildet ist, quer zu der Längsrichtung L und in der Horizontalen auf ein zweites Gegenelement 31 zu verfahren zu werden, um ein Produkt auch in dieser Richtung komprimieren zu können. Darüber umfasst die Presskammer 13 ein drittes Pressmittel 29, welches vertikal nach unten verfahrbar ist, um ein Produkt gegen ein drittes Gegenelement 33, welches die Produktebene 63 bildet, komprimieren zu können. Die Längsrichtung L kann sich insbesondere in der Horizontalen erstrecken und auch die Pressebene 63 kann horizontal ausgerichtet sein. Mittels der Presseinrichtung 11 kann ein Produkt somit in den drei Raumrichtungen komprimiert werden. Dies kann es beispielsweise ermöglichen, einen unregelmäßig geformten Bacon in eine annähernde Quaderform zu bringen, um den Bacon derart verpacken und zum Verkauf anbieten zu können, oder weiterverarbeiten zu können, wobei der Bacon beispielsweise mittels einer nachgelagerten Aufschneidevorrichtung in Scheiben geschnitten werden kann. Ein fertig komprimiertes Produkt kann in Längsrichtung L durch einen Ausgang 113 aus der Presskammer 13, beispielsweise mittels des ersten Pressmittels 17, herausgeschoben werden.

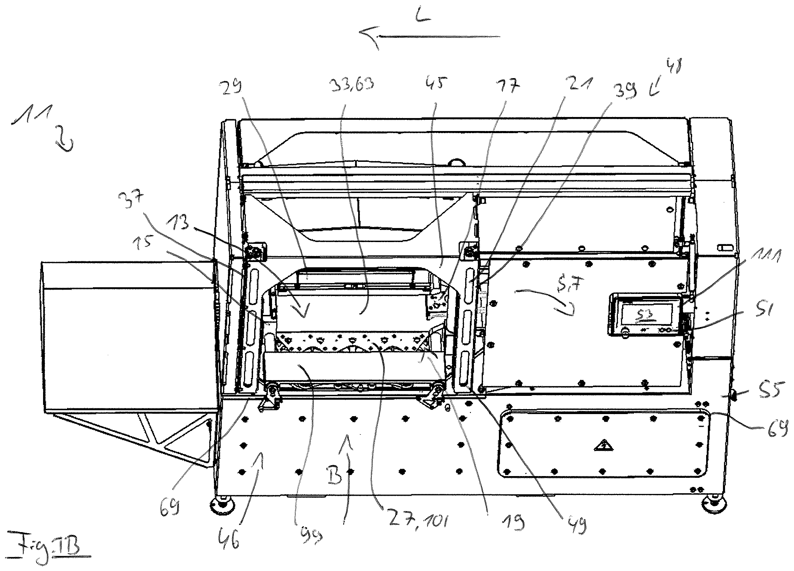

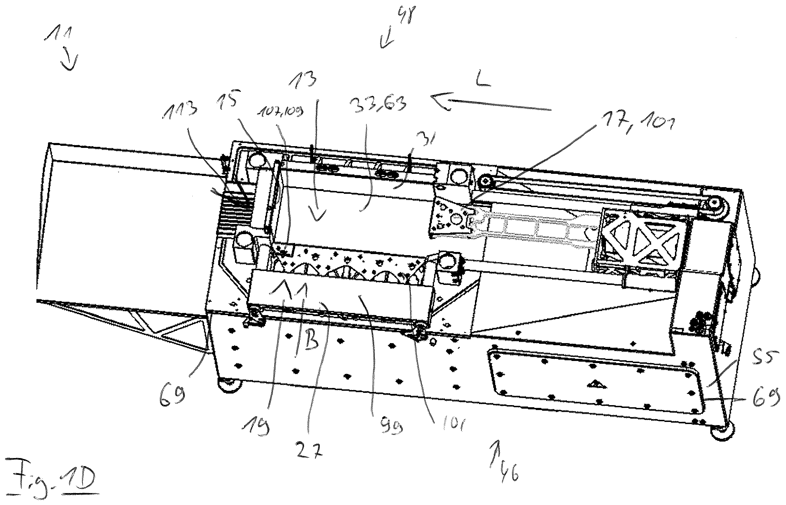

Wie insbesondere aus den Fig. 1B und 1D ersichtlich wird, umfasst das zweite Pressmittel 27, welches quer zu der Längsrichtung L verschiebbar ist, einen bewegbaren Schlitten 99, mit welchem ein Presswerkzeug 101 verbunden ist. An dem Presswerkzeug 101 ist dabei ein RFID-Chip 109 eingebaut, in welchem eine Kennzeichnung 107 gespeichert ist, anhand derer das Presswerkzeug 101 identifizierbar ist. Um eine Identifizierung des Presswerkzeugs 101 zu ermöglichen, umfasst eine Steuereinrichtung 53 der Presseinrichtung 11 eine Ausleseeinrichtung 111, mittels derer die Kennzeichnung 107 auslesbar ist.

Fernere ist bei der Presseinrichtung 11 vorgesehen, dass das Presswerkzeug 101 werkzeuglos aus der Presskammer 13 entnehmbar und/oder werkzeuglos in die Presskammer 13 einsetzbar ist. Insbesondere kann das Presswerkzeug 101 dazu werkzeuglos von dem Schlitten 99 lösbar und/oder werkzeuglos mit dem Schlitten 99 verbindbar sein. Beispielsweise kann es vorgesehen sein, dass das Werkzeug 101 über eine Steckverbindung mit dem Schlitten 99 verbunden werden kann.

Ein solches werkzeugloses Entnehmen des Presswerkzeugs 101 kann es insbesondere ermöglichen, das Presswerkzeug 101 schnell für eine Reinigung oder Wartung aus der Presskammer 13 herauszuholen. Darüber hinaus können jedoch durch eine solche werkzeuglose Entnahme, bei welcher insbesondere der zumeist schwere Schlitten 99 in der Presskammer verbleiben kann, flexibel verschiedene Presswerkzeuge 101 mit dem Schlitten 99 verbunden werden, um beispielsweise durch Einsetzen eines größeren Presswerkzeugs 101 eine größere Komprimierung erreichen zu können. Indem die Ausleseeinrichtung 111 dabei dazu ausgebildet sein kann, einen jeweiligen RFID-Chip 109 des Presswerkzeugs 101 auszulesen, kann der Pressvorgang insbesondere unter Berücksichtigung des jeweiligen eingesetzten Presswerkzeugs 101 durchgeführt werden. So können einem jeweiligen Presswerkzeug 101 beispielsweise verschiedene Verfahrwege und/oder Presskräfte zugeordnet sein und die Steuereinrichtung 53 kann dazu ausgebildet sein, eine entsprechende Prozesssteuerung durchzuführen.

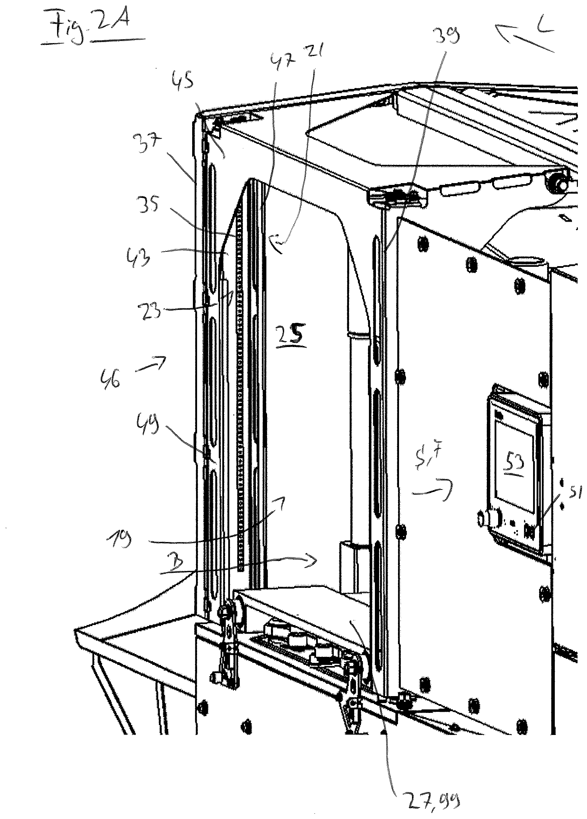

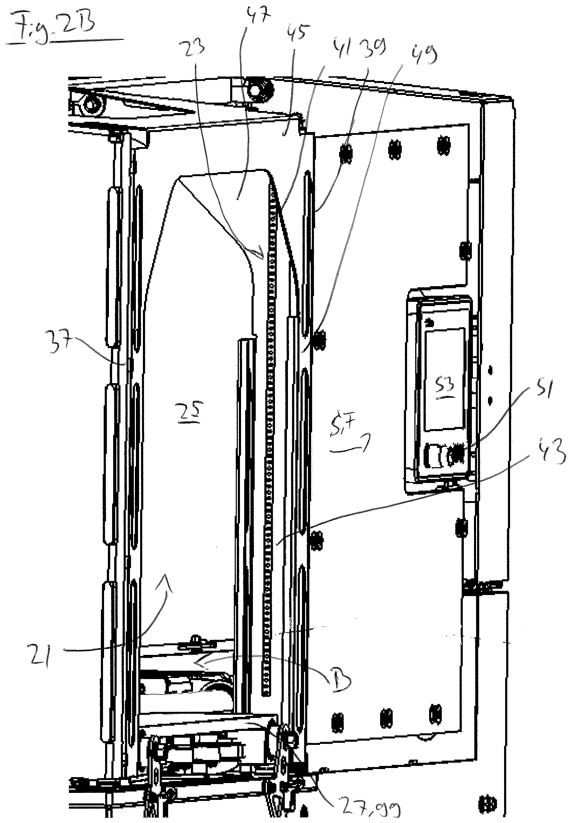

Darüber hinaus wird aus den Fig. 1A bis 1D ersichtlich, dass ein in die Presskammer 13 einzubringendes Produkt über das zweite Pressmittel 27 hinweg entlang der Einbringrichtung B in die Presskammer 13 einzubringen ist. Dies kann, wie bereits erläutert, bei dieser Presseinrichtung 11 insbesondere manuell erfolgen. Daher muss ein Benutzer zum Einbringen eines Produkts in die Presskammer 13 eingreifen. Um etwaige Verletzungen eines Benutzers zuverlässig verhindern zu können, obwohl dieser während des Betriebs in die Presskammer 13 eingreifen können muss, weist die Presseinrichtung 11 eine Eingangskontrolleinrichtung 21 auf, welche dazu ausgebildet ist, ein sich in dem Eingang 19 befindendes Objekt zu erfassen und ein entsprechendes Erfassungssignal S an die Steuereinrichtung 53 zu übermitteln. Wie insbesondere aus den Fig. 2A und 2B hervorgeht, weist die Eingangskontrolleinrichtung 21 dazu insbesondere eine Vielzahl von an einer ersten Seite 37 des Eingangs 19 angeordneten Lichtquellen 35 auf, welche in einer Reihe hintereinander angeordnet und dazu ausgebildet sind, einen jeweiligen Lichtstrahl auszusenden. Auf einer der ersten Seite 37 des Eingangs 19 entgegengesetzten zweiten Seite 39 des Eingangs 19 sind für jede der Lichtquellen zugeordnete Lichtsensoren 41 angeordnet, welche dazu ausgebildet sind, den jeweiligen von der zugeordneten Lichtquelle 35 emittierten Lichtstrahl zu detektieren. Dementsprechend bilden eine jeweilige Lichtquelle 35 und der zugeordnete Lichtsensor 39 eine Lichtschranke 22. Auch die Lichtsensoren 41 sind in einer Reihe hintereinander angeordnet.

Indem die Eingangskontrolleinrichtung 21 eine Vielzahl von Lichtquellen 35 und eine Vielzahl von entsprechender Lichtsensoren 41 aufweist, ist die Eingangskontrolleinrichtung 21 dazu ausgebildet, ein Lichtgitter 25 entlang des Eingangs 19 zu erzeugen. Dieses Lichtgitter 25 umfasst insbesondere die parallel zueinander ausgerichteten Lichtstrahlen, welche die Lichtquellen 35 aussenden. Insbesondere kann die Eingangskontrolleinrichtung 21 dazu ausgebildet sein, das Erfassungssignal S an die Steuereinrichtung 53 zu übermitteln, wenn zumindest eine der Lichtschranken 23 bzw. das Lichtgitter 25 unterbrochen ist.

Indem eine solche Eingangskontrolleinrichtung 21 vorgesehen ist, kann insbesondere ein unbedarfter Eingriff eines Benutzers durch den Eingang 19 detektiert und ein gegebenenfalls bereits gestarteter Pressvorgang beeinflusst werden, um eine Verletzung des Benutzers zu verhindern. Dies ermöglicht eine hohe Sicherheit der Presseinrichtung 11, wohingegen es jedoch nicht erforderlich ist, den Eingang 19 vor einem Pressvorgang durch eine massive Abdeckung zu verschließen. Dies ist bei herkömmlichen Presseinrichtungen zumeist erforderlich, was jedoch aufgrund des Gewichts einer solchen Abdeckung in der Regel schwer durchzuführen ist und insbesondere auch den Prozess des Pressens verlangsamen kann, da ein solches Schließen der Presskammer 13 vor jedem Pressvorgang erforderlich ist und der Eingang 19 erst wieder geöffnet werden muss, um ein neues Produkt in die Presskammer 13 einbringen zu können. Bei der anhand der Figuren veranschaulichten Presseinrichtung 11 kann der Eingang 19 hingegen während des gesamten Pressvorgangs offenbleiben, wobei jedoch aufgrund der Eingangskontrolleinrichtung 21 dennoch eine hohe Prozesssicherheit erreicht werden kann.

Darüber hinaus kann die Prozesssteuerung noch weiter verbessert werden, indem von der Eingangskontrolleinrichtung 21 ausgesandte Signale, insbesondere das Erfassungssignal S, unmittelbar in die Prozesssteuerung einbezogen werden. Die Eingangskontrolleinrichtung 21 kann zudem dazu ausgebildet sein, ein Freigabesignal F auszusenden, wenn sich kein Objekt in dem Eingang 19 befindet. Dazu kann die Eingangskontrolleinrichtung 21 beispielsweise ein gesondertes Signal aussenden, um ein Freigabesignal F an die Steuervorrichtung 53 zu übermitteln, oder das Ausbleiben eines Erfassungssignals S kann als Freigabesignal F gewertet werden. Die Steuereinrichtung 53 kann beispielsweise dazu ausgebildet sein, den Pressvorgang automatisch zu starten, wenn eine vorgegebene oder vorgebbare zeitliche Korrelation zwischen einem Erfassungssignal S und einem darauffolgenden Freigabesignal F vorliegt. Wenn ein Benutzer ein zu pressendes Produkt in die Presskammer 13 einbringt, greift der Benutzer durch den Eingang 19 hindurch und aufgrund des sich in dem Eingang 19 befindenden Arms des Benutzers erzeugt die Eingangskontrolleinrichtung 21 ein Erfassungssignal S. Sobald der Benutzer den Arm jedoch wieder aus dem Eingang 19 entfernt, kann die Eingangskontrolleinrichtung 21 ein Freigabesignal F aussenden. Sofern zwischen dem zunächst ausgesendeten Erfassungssignal S und dem darauffolgenden Freigabesignal F eine zeitliche Korrelation besteht, welche etwa die Dauer eines typischen Einbringvorgangs widerspiegeln kann, kann die Steuereinrichtung 53 den Pressvorgang automatisch starten. Weitere Aktionen des Benutzers zum Starten des Pressvorgangs sind daher nicht erforderlich, so dass dieser insgesamt beschleunigt durchgeführt werden kann. Durch die zeitliche Korrelation kann auch sichergestellt werden, dass beispielsweise nicht unmittelbar bei einem Freigabesignal F, welches auf ein Erfassungssignal S folgt, ein Pressvorgang gestartet wird, so dass beispielsweise kein Pressvorgang nach länger andauernden Wartungsarbeiten, während derer sich dauerhaft ein Objekt in dem Eingang 19 befindet, gestartet wird. Es kann jedoch auch vorgesehen sein, mittels der Steuereinrichtung 53 während Wartungsarbeiten einen automatischen Start eines Pressvorgangs zu unterdrücken.

Wie im Einleitungsteil erwähnt, ist die Presseinrichtung 11 mit einer Zustandsanzeigeeinrichtung 51 versehen, die z.B. durch Aufleuchten einer grünen Leuchte einen Bereitschaftszustand der Presseinrichtung 11 zum Durchführen eines Pressvorgangs anzeigt, wenn die Eingangskontrolleinrichtung 21 kein Erfassungssignal S aussendet, und die ein Warnsignal z.B. durch Aufleuchten einer roten Leuchte anzeigt, wenn ein Erfassungssignal S vorliegt.

Wie ferner aus den Fig. 2A bis 2C hervorgeht, sind die Lichtquellen 35 und die Lichtsensoren 41 in einem jeweiligen Rohr 43 angeordnet, wie es insbesondere aus Kunststoff und/oder aus Plexiglas gefertigt sein kann. Die Rohre 43 können zudem abgedichtet sein, um die Lichtquellen 35 bzw. die Lichtsensoren 41 insbesondere vor dem Eintreten von zu Reinigungszwecken verwendeter Flüssigkeit und einer dadurch bedingten Beschädigung zu schützen.

Darüber hinaus weist die Presseinrichtung 11 einen Vorderrahmen 45 auf, durch welchen die Lichtquellen 35 und die Lichtsensoren 41 an einer der Presskammer 13 abgewandten Vorderseite 46 abgeschirmt sind. Der Vorderrahmen 45 kann beispielsweise aus Blech ausgebildet sein und dazu dienen, die Lichtquellen 35 bzw. die Lichtsensoren 41 zusätzlich vor einer Beschädigung zu schützen, wenn die Presskammer 13 beispielsweise mittels eines Hochdruckreinigers gereinigt wird. Gleichsam kann dadurch eine solche Reinigung der Presskammer 13 ermöglicht werden, ohne dass eine Beschädigung der Eingangskontrolleinrichtung 21 droht.

Darüber hinaus weist die Presseinrichtung 11 auf einer der Presskammer 13 zugewandten Rückseite 48 einen Hinterrahmen 47 auf, welcher gleichsam aus Blech ausgebildet sein kann. Insbesondere kann dieser Hinterrahmen 47 die Lichtquellen 35 bzw. die Lichtsensoren 41 vor einer Beschädigung schützen, wenn beispielsweise das Presswerkzeug 101 des zweiten Pressmittels 27 aus der Presskammer 13 entnommen wird. Ein Anschlagen des Pressmittels 101 an den Rohren 43 kann vermieden werden. In gleicher Weise kann der Vorderrahmen 45 auch dazu dienen, ein Anschlagen des Presswerkzeugs 101 an den Rohren 43 und/oder den Lichtquellen 35 und/oder den Lichtsensoren 41 während eines Einsetzens des Presswerkzeugs 101 zu verhindern.

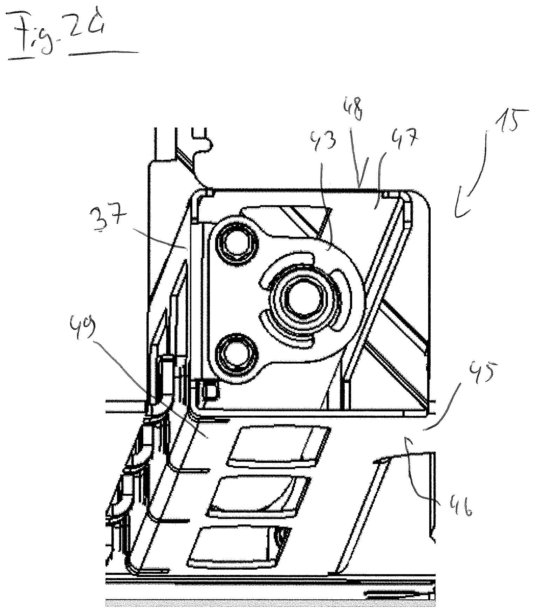

Wie insbesondere aus Fig. 2C hervorgeht, sind die Lichtquellen 35 auch an der ersten Seite 39 des Eingangs 19 abgeschirmt, so dass die Lichtgitter 35 insgesamt dreiseitig durch eine Einkapselung 49 vor Beschädigungen geschützt sind. Die Einkapselung 49 ist dabei U-förmig ausgebildet, so dass die von den Lichtquellen 35 emittierten Lichtstrahlen in Richtung der zweiten Seite 39 austreten können, die Lichtquellen 35 an den anderen Seiten jedoch zuverlässig geschützt sind. In gleicher Weise sind auch die Lichtsensoren 41 bzw. das Rohr 43, in welchem die Lichtsensoren 41 angeordnet sind, dreiseitig eingekapselt.

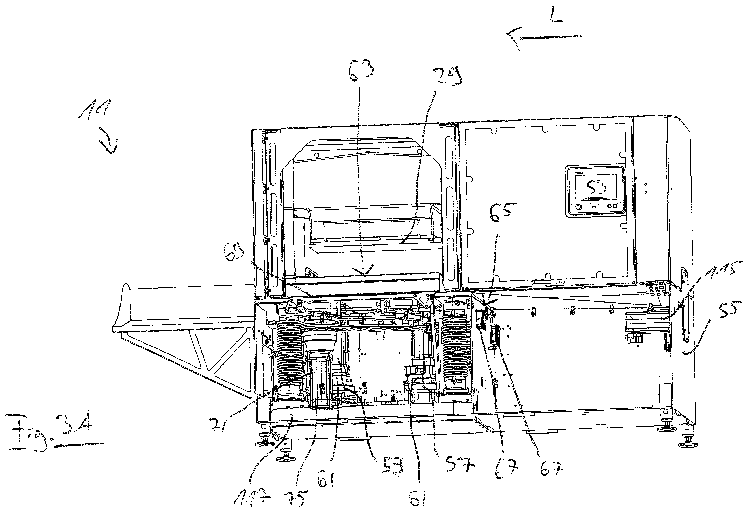

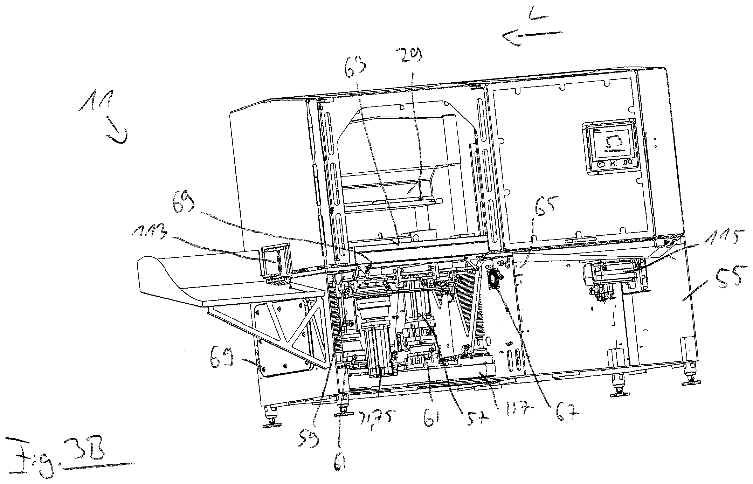

Die Fig. 3A und 3B zeigen wiederum eine jeweilige perspektivische Darstellung der Presseinrichtung 11, wobei jedoch an der Vorderseite 46 eine Gehäuseabdeckung eines geschlossenen Gehäuses 55 entnommen ist, so dass die darin angeordneten Komponenten sichtbar sind.

Indem die Produkte, wie vorstehend erläutert, bei der gezeigten Presseinrichtung manuell über das zweite Pressmittel 27 hinweg in die Presskammer 13 eingebracht werden, muss in vertikaler Richtung ein ausreichender Freiraum für dieses Einbringen bestehen. Dementsprechend muss dieser Freiraum von dem in vertikaler Richtung verfahrbaren dritten Pressmittel 29 gewährt werden, so dass das dritte Pressmittel 29 einen verhältnismäßig großen Weg zurücklegen muss, um ein in der Presskammer 13 angeordnetes Produkt pressen zu können. Um dennoch einen Pressvorgang möglichst schnell durchführen und diesen Weg schnell überbrücken zu können, weist die Presseinrichtung 11 einen ersten Motor 57 und einen zweiten Motor 59 auf, mittels derer das dritte Pressmittel 29 verfahrbar ist. Die Motoren 57 und 59 sind unterhalb der Pressebene 63 in dem geschlossenen Gehäuse 55 angeordnet.

Ferner treiben die Motoren 57 und 59 einen Riemen 117 an, um das dritte Pressmittel 29 an vier Stellen in Richtung der Pressebene 63 herabziehen zu können. Die Motoren 57 und 59 sind dabei über ein jeweiliges Getriebe 61 mit dem Riemen 117 verbunden. Der erste Motor 57 ist dazu ausgebildet, relativ zu dem zweiten Motor 59 das dritte Pressmittel 29 schneller zu verfahren, wohingegen der zweite Motor 59 dazu ausgebildet ist, eine gegenüber dem ersten Motor 57 größere Kraft zu entfalten. Dementsprechend kann eine Drehzahl des zweiten Motors 59 mittels des zugeordneten Getriebes 61 stärker untersetzt auf den Riemen 117 übertragen werden, als eine Drehzahl des ersten Motors 57 mittels des zugeordneten Getriebes 61.

Um einen schnellen Pressvorgang zu ermöglichen, kann die Steuereinrichtung 53 dazu ausgebildet sein, das dritte Pressmittel 29 zunächst mittels des schnelleren ersten Motors 57 vorzupositionieren und beispielsweise in Anlage zu dem sich in der Presskammer 13 befindenden Produkt zu bringen. Daraufhin kann die Steuereinrichtung 53 dazu ausgebildet sein, das Produkt mittels des eine größere Kraft entfaltenden zweiten Motors 59 zu komprimieren. Dazu kann der zweite Motor 59 beispielsweise einkuppelbar sein, so dass auch der erste Motor 57 während des Pressvorgangs weiterdrehen kann. Das Zurückfahren des dritten Pressmittels 29 nach einem Pressvorgang kann wiederum beispielsweise durch den ersten Motor 57 erfolgen. Durch ein solches Antreiben des dritten Pressmittels 29 mittels zweier Motoren 57 und 59 kann somit einerseits der zum Einbringen des Produkts in die Presskammer 13 erforderliche Freiraum schnell überbrückt und andererseits dennoch die erforderliche Presskraft entfaltet werden.

Darüber hinaus ist auch ein Antrieb 71 mit einem Elektromotor 75, mittels dessen das zweite Pressmittel 27 antreibbar ist, in dem geschlossenen Gehäuse 55 und unter der Pressebene 63 angeordnet. Auch ein Motor 115, mittels dessen das erste, in Längsrichtung 11 verfahrbare Pressmittel 17 verfahrbar ist, ist unter der Pressebene 63 und in dem geschlossenen Gehäuse 55 angeordnet. Insbesondere sind somit sämtliche Motoren 57, 59, 75 und 115 zum Antreiben der Pressmittel 17, 27 und 29 unterhalb der Pressebene 63 angeordnet, so dass eine Kontamination des sich in der Presskammer befindenden Produkts, beispielsweise durch austretendes Schmiermittel, verhindert werden kann.

Darüber hinaus ist, wie bereits erwähnt, das Gehäuse 55, in welchem die Motoren 57, 59, 75 und 115 angeordnet sind, geschlossen. Insbesondere kann das Gehäuse 55 durch eine Abdichtung 69 gegen die Pressebene 63 abgedichtet sein, um eine Kontamination der Motoren 57, 59 und 75 durch beispielsweise während des Pressens austretende Flüssigkeit zu verhindern. Auch ein Eintritt von kontaminierter Luft aus einer Halle und/oder von Feuchtigkeit in das Gehäuse 55, durch welches die Motoren 57, 59, 75 oder 115 bzw. die sonstigen Antriebskomponenten beschädigt werden könnten, kann ebenfalls verhindert werden.

Darüber hinaus ist in dem geschlossenen Gehäuse 55 eine Luftstromeinrichtung 65 angeordnet, welche zwei Gebläse 67 umfasst. Die Gebläse 67 sind dazu ausgebildet, einen Luftstrom, insbesondere einen innerhalb des Gehäuses 55 an den Innenseiten der Außenwände des Gehäuses 55 entlangströmenden Ringstrom, zu erzeugen, um von den Motoren 57, 59, 75 und 115 generierte Wärme in dem Gehäuse 55 verteilen und gleichmäßig über dessen Außenwände durch Konvektion abgeben zu können. Die gesamte oder zumindest ein wesentlicher Anteil der Fläche des Gehäuses 55 steht so für die Abgabe von Wärme zur Verfügung. Dies ermöglicht eine Kühlung der Motoren 57, 59, 75 und 115, ohne dass dazu ein Luftaustausch zwischen der Luft in dem Gehäuse 55 und sich außerhalb des Gehäuses 55 befindender Luft erforderlich ist. Auch etwaige Abdeckungen des Gehäuses 55, durch welche ein Zugriff beispielsweise für Wartungsarbeiten ermöglicht werden kann, sind durch jeweilige Abdichtungen 69 abgedichtet (vgl. beispielsweise Fig. 3B).

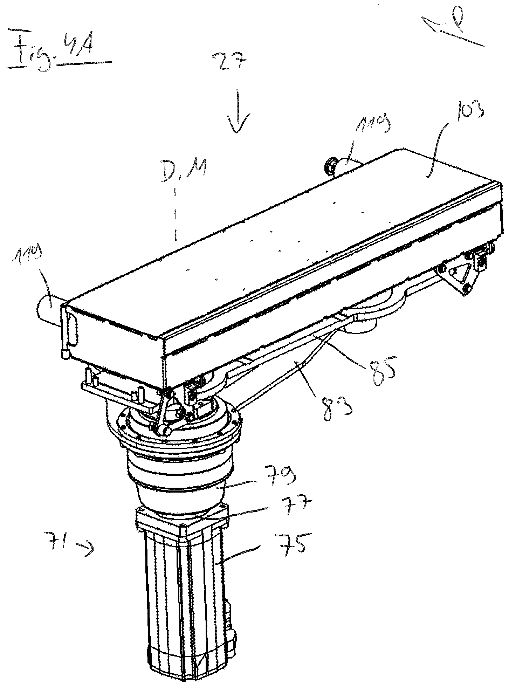

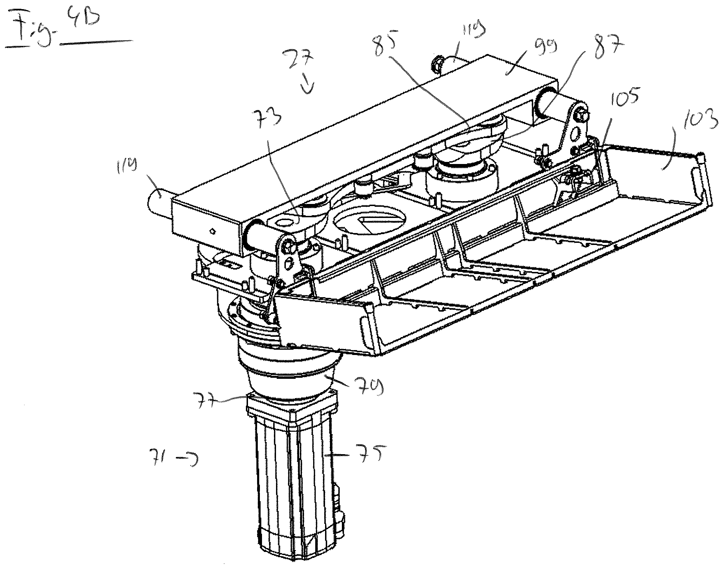

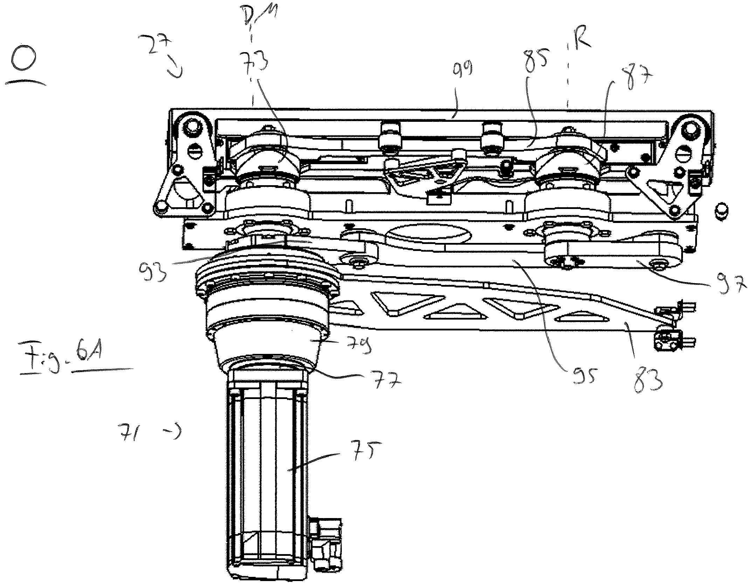

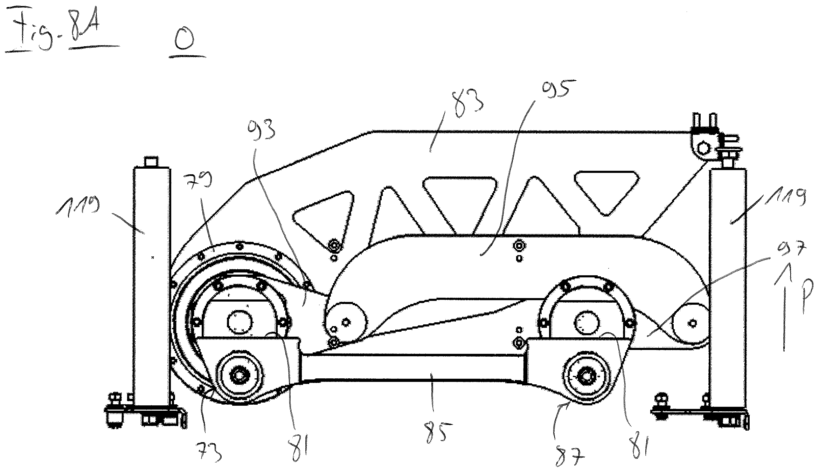

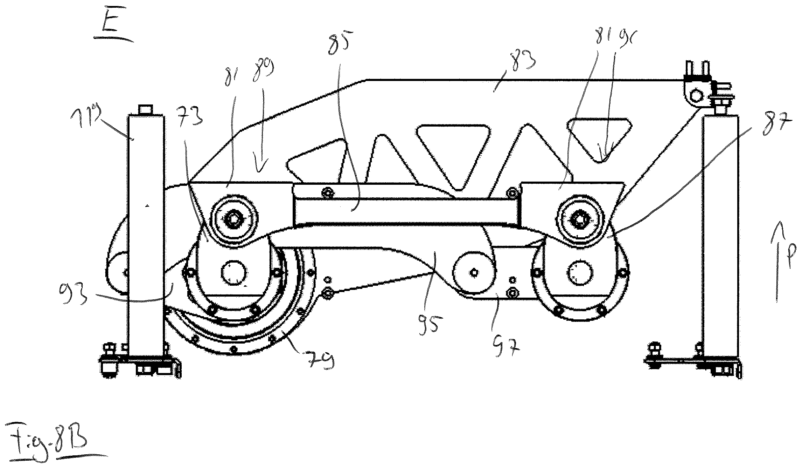

Die Fig. 4A und 4B veranschaulichen ferner das zweite Pressmittel 27 und dessen Antrieb 71, auf welchen nachstehend auch im Zusammenhang mit den Fig. 6A bis 8B noch genauer eingegangen wird. Das Pressmittel 27 umfasst den Schlitten 99, an welchem das Presswerkzeug 101 befestigt werden kann. Der Schlitten 99 ist ferner von einer Schutzabdeckung 103 abgedeckt, wobei diese Schutzabdeckung 103 jedoch, wie Fig. 4B zeigt, relativ zu dem Pressmittel 27 bewegt und insbesondere verschwenkt werden kann. Hierdurch kann, wie Fig. 4B zeigt, ein Zugriff für beispielsweise Reinigungs- oder Wartungsarbeiten zu den unterhalb des Schlittens 99 angeordneten Komponenten des Antriebs 71 des Pressmittels 27 freigegeben werden. Insbesondere sind diese Komponenten dabei zugänglich, ohne dass der Schlitten 99 aus der Presskammer 13 entfernt werden muss. Dies kann Wartungs- und/oder Reinigungsarbeiten deutlich erleichtern. Insbesondere zeigt Fig. 4B, dass der Schlitten 99 einen Exzenter 73 und einen weiteren Exzenter 87 sowie eine Koppelstange 85, deren Funktionen nachstehend näher erläutert sind, gehäuseartig umgibt.

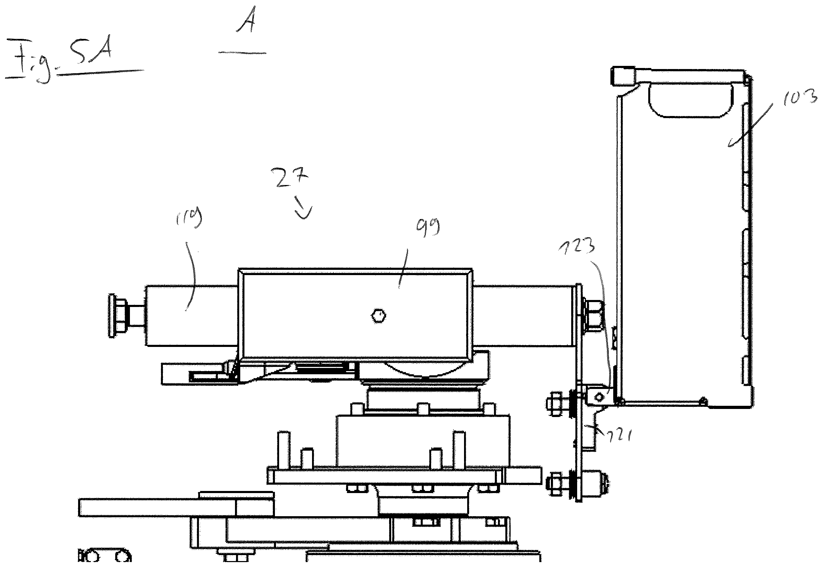

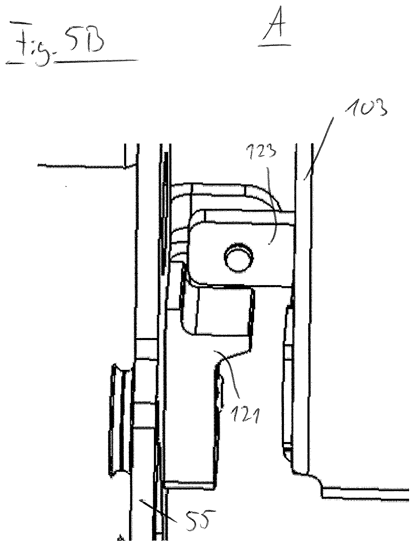

Während die Schutzabdeckung 103 somit relativ zu dem Schlitten 99 verschwenkbar ist, um einen Zugang auf die darunter angeordneten Komponenten des Antriebs 71 des Pressmittels 27 zu ermöglichen, kann die Schutzabdeckung 103 darüber hinaus auch werkzeuglos von dem Gehäuse 55 der Presseinrichtung 11 entnommen werden, wie anhand der Fig. 5A bis 5C veranschaulicht ist. Während eines Pressvorgangs, während dessen das Pressmittel 27 entlang einer Pressrichtung P verfahren werden kann, kann der Schlitten 99 jedoch aus der Schutzabdeckung 103 herausgefahren werden, wobei die Schutzabdeckung 103 an dem Gehäuse 55 befestigt und daher unbewegt bleibt.

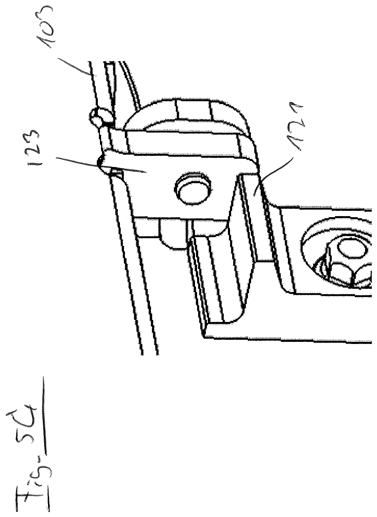

Fig. 5A zeigt die Schutzabdeckung 103 in einer Entnahmestellung A, in welcher die Schutzabdeckung 103 um 90° relativ zu dem Schlitten 99 verschwenkt ist. In dieser Stellung ist eine an der Schutzabdeckung 103 ausgebildete Lasche 123 gerade so relativ zu einem an dem Gehäuse 55 fixierten Sicherungselement 121 ausgerichtet, dass die Schutzabdeckung 103 über das Sicherungselement 121 geschoben und dadurch von dem Gehäuse 55 gelöst werden kann. Während eines Pressvorgangs, während dessen die Schutzabdeckung 103 den Schlitten 99 bedeckt, hintergreift die Lasche 123 hingegen das Sicherungselement 121, so dass die Schutzabdeckung 130 an dem Gehäuse gehalten ist (vgl. Fig. 5C). Darüber hinaus zeigt Fig. 4B, dass die Schutzabdeckung 103 eine Sicherungsschaltung 105 aufweist, welche dazu ausgebildet ist, zu erfassen, wenn die Schutzabdeckung 103 den Schlitten 99 bedeckt. Dadurch kann sichergestellt werden, dass die Schutzabdeckung 103 während eines Pressvorgangs sicher über dem Schlitten 99 angeordnet ist, um insbesondere eine der Schutzabdeckung 103 zugewandte Quetschstelle, auf welche der Schlitten 99 bei einem Herausfahren aus der Presskammer 13 zugefahren wird, zu sichern. Die Sicherungsschaltung 105 kann insbesondere mit der Steuereinrichtung 53 der Presseinrichtung 11 verbunden sein, wobei die Steuereinrichtung 53 dazu ausgebildet sein kann, einen Pressvorgang lediglich dann zu starten, wenn die Sicherungsschaltung 105 anzeigt, dass die Schutzabdeckung 103 korrekt positioniert ist.

Um ein Produkt in der Presskammer 13 mittels des Pressmittels 27 komprimieren zu können, ist das Pressmittel 27 entlang einer Pressrichtung P zwischen einer Startposition O, in welche das Pressmittel 27 am weitesten von dem Gegenelement 31 entfernt ist, und einer Endposition E, in welcher das Pressmittel 27 am weitesten auf das Gegenelement 31 zu verfahren ist, mittels des Antriebs 71 bewegbar (vgl. Fig. 4A, 4B sowie 6A bis 8B). Dabei ist das Pressmittel 27 bzw. der Schlitten 99 über zwei seitliche Führungen, welche als Führungsstangen 119 ausgebildet sind, entlang der Pressrichtung P geführt, um eine möglichst lineare Bewegung des Pressmittels 27 ohne die Gefahr eines Verkantens zu erreichen.

Insbesondere kann die Presseinrichtung 11 als Bestandteil einer Verarbeitungslinie für Fleischprodukte vorgesehen sein, wobei die von der Presseinrichtung 11 komprimierten Fleischprodukte beispielsweise, wie vorstehend bereits erwähnt, von einer nachgelagerten Aufschneidevorrichtung in Scheiben geschnitten werden können. Eine solche Verarbeitungslinie kann sich insbesondere entlang der Längsrichtung L der Presskammer 13 erstrecken, wobei jedoch der für die Presseinrichtung 11 zur Verfügung stehende Raum insbesondere bei einer Integration in eine solche zumeist ohnehin lange Verarbeitungslinie beschränkt sein kann. Dies kann auch und insbesondere für eine Richtung quer zu der Längsrichtung L gelten, welche mit der Pressrichtung P des Pressmittels 27 übereinstimmt und entlang welcher die Produkte auch in Einbringrichtung B in die Presskammer 13 eingebracht werden können. Insbesondere das Einbringen der Produkte entlang der Einbringrichtung B erfordert eine schmale Bauweise der Presseinrichtung 11, um einen möglichst leichten Zugang in die Presskammer 13 zu ermöglichen. Gleichsam ist jedoch ein Antrieb für das Pressmittel 27 erforderlich, um dieses in Pressrichtung P verschieben zu können, wobei eine schmale Bauweise dieses Antriebs anzustreben ist.

Dies ist bei der anhand der Figuren veranschaulichten Presseinrichtung 11 dadurch realisiert, dass der Antrieb 71 dazu ausgebildet ist, zum Verfahren des Pressmittels 27 von der Startposition O in die Endposition E einen um eine Drehachse D drehbaren Exzenter 73 anzutreiben, wobei das Pressmittel 27 durch eine Drehung des Exzenters 73 um mehr als 90°, hier 180°, von der Startposition O in die Endposition E verfahrbar ist. Die Drehachse D des Exzenters 73 ist dabei koaxial zu einer Motordrehachse M, um welche eine Motorwelle 77 des Elektromotors 75 drehbar ist, angeordnet bzw. entspricht der Motordrehachse M.

Indem der Exzenter 73 zum Verfahren des Pressmittels 27 von der Startposition O in die Endposition E um 180° drehbar ist, kann mittels des Exzenters 73 bei lediglich geringer Exzentrizität ein verhältnismäßig großer Verfahrweg realisiert werden, indem der Verfahrweg der doppelten Exzentrizität entsprechen kann. Aufgrund der lediglich geringen Exzentrizität des Exzenters 73 muss zudem der Motor 75 gleichsam lediglich verhältnismäßig geringe Drehmomente aufbringen, um die erforderliche Kraft zum Komprimieren eines Produkts in der Presskammer 13, beispielsweise etwa 1 kN, aufbringen zu können.

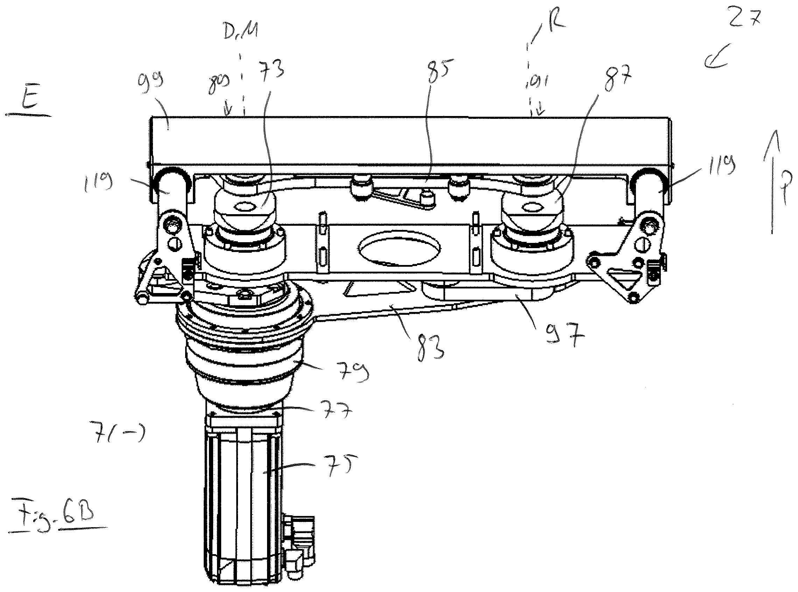

Insbesondere kann es vorgesehen sein, das Pressmittel 27 während eines Pressvorgangs zuerst zu verfahren, wobei der Exzenter 73, wie insbesondere Fig. 6B zeigt, in der Endposition E in Pressrichtung P und in Richtung der Presskammer 73 ausgerichtet sein kann, so dass während des Verfahrens der weiteren Pressmittel 17 und 33 (zum Komprimieren des Produktes in Längsrichtung und in Vertikalrichtung) durch das Produkt auf das Pressmittel 27 übertragene Kräfte kein Drehmoment auf den Motor 75 übertragen, so dass der Antrieb 71 diesen Kräften widerstehen kann. Darüber hinaus kann aufgrund der lediglich verhältnismäßig geringen zu erzeugenden Drehmomente auch ein Getriebe 79, über welches der Exzenter 73 mit dem Elektromotor 75 verbunden ist und welches beispielsweise als Planetengetriebe ausgebildet sein kann, verhältnismäßig einfach und dadurch günstig ausgebildet sein. Insbesondere kann das Getriebe 79 eine Übertragung einer Drehzahl der Motorwelle 77 auf den Exzenter 73 mit verlangsamter Drehzahl ermöglichen, um die erforderlichen Drehmomente mittels eines schnell drehenden Elektromotors 75 generieren zu können.

Indem die Drehung des Elektromotors 75 unmittelbar in dem Sinne auf den Exzenter 73 übertragen wird, dass keine Übersetzung der Drehbewegung des Motors 75 in eine translatorische Bewegung erfolgt, kann insbesondere auch ein hoher Wirkungsgrad des Antriebs 71 erreicht werden. Darüber hinaus ermöglicht diese direkte Übertragung der Drehbewegung, anders als bei einem Antrieb eines Exzenters beispielsweise mittels einer Pleuelstange eines Hydraulikantriebs, die genannte Drehung des Exzenters 73 um 180°. Dies wird dadurch erreicht, dass mittels des Elektromotors 75 stets dasselbe Drehmoment auf den Exzenter 73 übertragen werden kann, wohingegen bei einer Übertragung beispielsweise mittels einer translatorisch bewegten Pleuelstange lediglich in einem geringen Winkelbereich ein ausreichendes Drehmoment übertragen werden kann.

Ferner sind die Drehachse D sowie die Motordrehachse M bei der gezeigten Ausführungsform vertikal ausgerichtet, so dass sich der Antrieb 71 von dem Schlitten 99 vertikal nach unten erstreckt. Insbesondere ist der Antrieb 71 an dem Schlitten 99 vertikal gehalten. Ferner ist der Antrieb 71 bzw. das Getriebe 79 über eine Drehmomentstütze 83 an dem Gehäuse 55 der Presseinrichtung 11 abgestützt, um während des Pressens auf das Pressmittel 27 übertragene Drehmomente auf das Gehäuse 55 übertragen zu können. Indem der Antrieb 71 jedoch anderweitig nicht an dem Gehäuse 55 fixiert ist und insbesondere an dem Pressmittel 27 hängt, kann beispielsweise ein Toleranzausgleich zwischen Lagern des Getriebes 79 und Lagern des Exzenters 73 erreicht werden. Drehmomente können jedoch zuverlässig auf das Gehäuse 75 abgeleitet werden.

Um einen weiteren Ausgleich von während des Pressens auftretenden Drehmomenten zu ermöglichen und insbesondere die Führungsstangen 119 vor einer Belastung quer zu der Pressrichtung P zu schützen, ist der Exzenter 73 über eine Koppelstange 85 mit einem weiteren Exzenter 87 verbunden, welcher um eine zu der Drehachse D des Exzenters 73 parallele Drehachse R drehbar ist. Der Exzenter 87 ist, über die Koppelstange 85, mittels des Elektromotors 75 antreibbar, so dass für die beiden Exzenter 73 und 87 lediglich ein einziger Antrieb 71 vorgesehen ist.

Der Exzenter 73 kann daher über einen Angriffspunkt 89 und der weitere Exzenter 87 über einen Angriffspunkt 91 an dem Schlitten 99 bzw. dem Pressmittel 27 angreifen, wobei die Angriffspunkte 89 und 91 quer zu der Pressrichtung P voneinander beabstandet sind. Über die Koppelstange 85 können während des Pressens auftretende Drehmomente zwischen den Angriffspunkten 91 und 89 bzw. dem Exzenter 73 und dem weiteren Exzenter 87 verteilt werden, um eine Auslenkung des Pressmittels 27 quer zu der Pressrichtung P zu verhindern.

Um die Übertragung von Drehmomenten weiter zu verbessern, ist unterhalb des Exzenters 73 ferner ein weiterer Exzenter 93 koaxial zu dem Exzenter 73 angeordnet, welcher über eine weitere Koppelstange 95 mit einem weiteren unteren Exzenter 97 verbunden ist, welcher koaxial unterhalb des weiteren Exzenters 87 angeordnet ist. Der untere Exzenter 93 ist dabei um 90° versetzt zu dem Exzenter 73 angeordnet und der weitere untere Exzenter 97 ist um 90° versetzt zu dem weiteren Exzenter 87 angeordnet. Der untere Exzenter 93 ist ferner ebenfalls drehfest mit der Motorwelle 77 des Elektromotors 75 verbunden, so dass der Elektromotor 75 auch den unteren Exzenter 93 und über die weitere Koppelstange 95 den weiteren unteren Exzenter 97 antreiben kann.

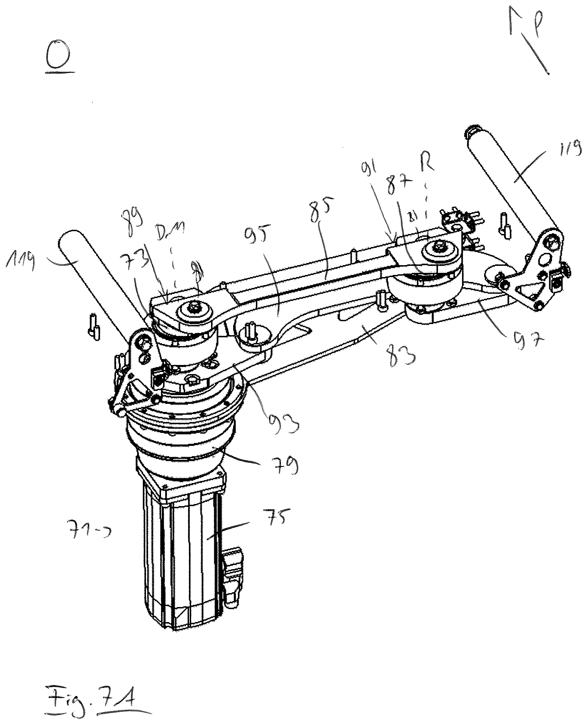

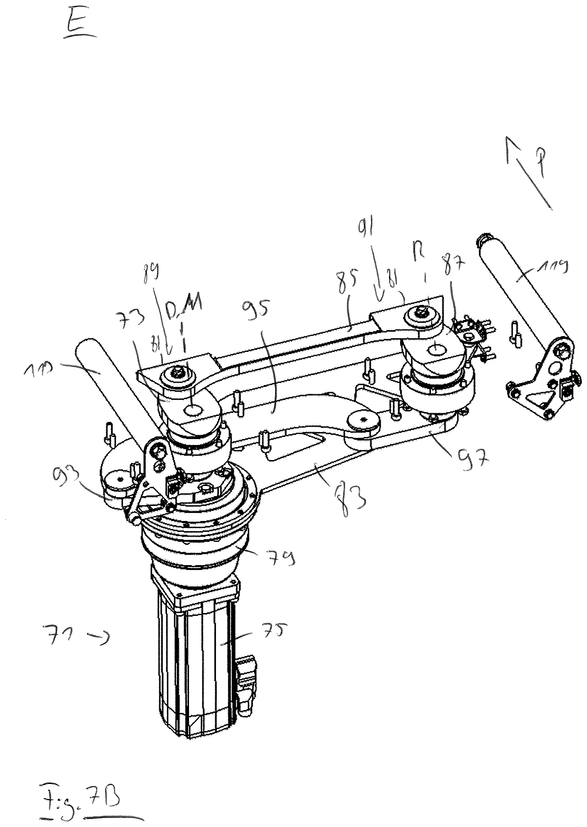

Indem der untere Exzenter 93 und der weitere untere Exzenter 97 um 90° versetzt zu dem Exzenter 73 und dem weiteren Exzenter 87 angeordnet sind, sind der untere Exzenter 93 und der weitere untere Exzenter 97 insbesondere auch in einer Stellung des Pressmittels 27, in welcher der Exzenter 73 und der weitere Exzenter 87 quer zu der Pressrichtung und parallel zu der Koppelstange 85 ausgerichtet sind, entlang der Pressrichtung P und senkrecht zu der weiteren Koppelstange 95 ausgerichtet. Diese Stellung ist insbesondere bei einer Drehung des Exzenters 73 ausgehend von der Startposition O um 90° erreicht. Da der Exzenter 73 und der weitere Exzenter 87 in dieser Stellung parallel zu der Koppelstange 85 ausgerichtet sind, kann in dieser Stellung keine optimale Übertragung von Drehmomenten zwischen dem Angriffspunkt 89 und dem Angriffspunkt 91 erfolgen. Umgekehrt kann jedoch aufgrund der zu der weiteren Koppelstange 95 senkrechten Stellung des unteren Exzenters 93 und des Weiteren unteren Exzenters 97 in dieser Position des Pressmittels 27 ein maximales Drehmoment über die weitere Koppelstange 95 übertragen werden, so dass auch in dieser Position ein optimaler Ausgleich erreicht werden kann. Die weitere Koppelstange 95 ist ferner gekrümmt ausgebildet, um während einer Bewegung des Pressmittels 27 aus der Startposition O in die Endposition E um die Drehachsen D und R des Exzenters 73 bzw. des weiteren Exzenters 87 herumgeführt werden zu können, wie beispielsweise aus den Fig. 7A und 7B hervorgeht.

Der Antrieb 71 ermöglicht somit, das Pressmittel 27 effizient anzutreiben, wobei eine in Pressrichtung P schmale Ausrichtung erreicht werden kann. Zudem sind die Komponenten des Antriebs 71, insbesondere der Exzenter 73, in der Endposition E des Pressmittels 27 nach einem Entfernen der Schutzabdeckung 103 zugänglich, ohne dass der Schlitten 99 aus der Presseinrichtung 11 bzw. der Presskammer 13 entfernt werden muss. Insbesondere kann somit eine Reinigung und/oder Wartung der Komponenten des Antriebs 71 erfolgen, ohne dass der Schlitten 99 entfernt werden muss. Darüber hinaus ist der Exzenter 73 und auch der weitere Exzenter 87 dazu ausgebildet, über ein Gleitelement 81 an dem Pressmittel 27 bzw. dem Schlitten 99 anzugreifen, so dass die Bewegungen der Koppelstange 85 quer zu der Pressrichtung P während eines Verfahrens des Pressmittels 27 ausgeglichen werden können. Die Gleitelemente 81 sind folglich dazu ausgebildet, während eines Verfahrens des Pressmittels 27 an dem Pressmittel 27 bzw. dem Schlitten 99 quer zu der Pressrichtung P abzugleiten.

### Bezugszeichenliste

- 11: Presseinrichtung
- 13: Presskammer
- 15: erstes Gegenelement
- 17: erstes Pressmittel
- 19: Eingang
- 21: Eingangskontrolleinrichtung
- 23: Lichtschranke
- 25: Lichtgitter
- 27: zweites Pressmittel
- 29: drittes Pressmittel
- 31: zweites Gegenelement
- 33: drittes Gegenelement
- 35: Lichtquelle
- 37: erste Seite
- 39: zweite Seite
- 41: Lichtsensor
- 43: Rohr
- 45: Vorderrahmen
- 46: Vorderseite
- 47: Hinterrahmen
- 48: Rückseite
- 49: Einkapselung
- 51: Zustandsanzeigeeinrichtung
- 53: Steuereinrichtung
- 55: Gehäuse
- 57: erster Motor
- 59: zweiter Motor
- 61: Getriebe
- 63: Pressebene
- 65: Luftstromeinrichtung
- 67: Gebläse
- 69: Abdichtung
- 71: Antrieb
- 73: Exzenter
- 75: Elektromotor
- 77: Motorwelle
- 79: Getriebe
- 81: Gleitelement
- 83: Drehmomentstütze
- 85: Koppelstange
- 87: weiterer Exzenter
- 89: Angriffspunkt
- 91: Angriffspunkt
- 93: unterer Exzenter
- 95: weitere Koppelstange
- 97: weiterer unterer Exzenter
- 99: Schlitten
- 101: Presswerkzeug
- 103: Schutzabdeckung
- 105: Sicherheitsschaltung
- 107: Kennzeichnung
- 109: RFID-Chip
- 111: Ausleseeinrichtung
- 113: Ausgang
- 115: Motor
- 117: Riemen
- 119: Führungsstange
- 121: Sicherungselement
- 123: Lasche
- A: Entnahmestellung
- B: Einbringrichtung
- D: Drehachse
- E: Endposition
- F: Freigabesignal
- L: Längsrichtung
- M: Motordrehachse
- O: Startposition
- P: Pressrichtung
- R: Drehachse
- S: Erfassungssignal

## Patentansprüche

1. Presseinrichtung (11) zum Pressen von Fleischprodukten, insbesondere gefrorenen und/oder angefrorenen Fleischprodukten, bevorzugt Frischfleischprodukten und/oder Bacon, mit einer sich entlang einer Längsrichtung (L) erstreckenden Presskammer (13), in welche ein zu pressendes Produkt einbringbar ist,
wobei die Presskammer (13) zumindest ein Gegenelement (31) und ein mittels eines Antriebs (71) verfahrbares Pressmittel (27) umfasst,
wobei das Pressmittel (27) zum Komprimieren des Produkts von einer Startposition (O) entlang einer Pressrichtung (P) auf das Gegenelement (31) zu in eine Endposition (E) verfahrbar ist, und wobei der Antrieb (71) dazu ausgebildet ist, zum Verfahren des Pressmittels (27) von der Startposition (O) in die Endposition (E) zumindest einen um eine Drehachse (D) drehbaren Exzenter (73) anzutreiben,
wobei das Pressmittel (27) durch eine Drehung des Exzenters (73) von mehr als 90 Grad, insbesondere mehr als 120 Grad, bevorzugt um 180 Grad, aus der Startposition (O) in die Endposition (E) verfahrbar ist, **dadurch gekennzeichnet, dass**
der Exzenter (73) über eine Koppelstange (85) mit zumindest einem weiteren Exzenter (87) verbunden ist, wobei der Exzenter (73) und der weitere Exzenter (87) an quer zu der Pressrichtung (P) beabstandeten Angriffspunkten (89, 91) an dem Pressmittel (27) angreifen.

2. Presseinrichtung (11) nach Anspruch 1,
wobei der Antrieb (71) einen Elektromotor (75) umfasst, welcher dazu ausgebildet ist, den Exzenter (73) anzutreiben,
insbesondere wobei der Elektromotor (75) als Servomotor ausgebildet ist; und/oder insbesondere wobei die Drehachse (D) des Exzenters (73) einer Motordrehachse (M) entspricht, um welche eine Motorwelle (77) des Elektromotors (75) drehbar ist, oder insbesondere wobei die Drehachse (D) des Exzenters (73) parallel zu der Motordrehachse (M) ausgerichtet ist.

3. Presseinrichtung (11) nach Anspruch 2,
wobei eine Drehung der Motorwelle (77) ohne Umlenkung in eine translatorische Bewegung in eine Drehung des Exzenters (73) überführbar ist.

4. Presseinrichtung (11) nach Anspruch 2 oder 3,
wobei der Exzenter (73) über ein Getriebe (79), insbesondere ein Untersetzungsgetriebe, bevorzugt ein Planetengetriebe, mit dem Elektromotor (75) verbunden ist,
insbesondere wobei das Getriebe (79) koaxial zu dem Elektromotor (75) und dem Exzenter (73) angeordnet ist.

5. Presseinrichtung (11) nach einem der vorhergehenden Ansprüche,
wobei der Exzenter (73) über ein Gleitelement (81) mit dem Pressmittel (27) verbunden ist, wobei das Gleitelement (81) dazu ausgebildet ist, während des Verfahrens des Pressmittels (27) quer zu der Pressrichtung (P) an dem Pressmittel (27) abzugleiten; und/oder wobei der Exzenter (73) das Pressmittel (27) direkt mechanisch kontaktiert.

6. Presseinrichtung (11) nach einem der vorhergehenden Ansprüche,
wobei der Exzenter (73) eine Exzentrizität in einem Bereich von 50 mm bis 100 mm, insbesondere von 70 mm bis 80 mm, aufweist; und/oder
wobei mittels des Antriebs (71) eine Kraft von weniger als 2 kN und/oder mehr als 0,8 kN auf das Pressmittel (27) übertragbar ist; und/oder
wobei die Pressrichtung (P) senkrecht zu der Längsrichtung (L) ausgerichtet ist.

7. Presseinrichtung (11) nach einem der vorhergehenden Ansprüche,
wobei die Drehachse (D) des Exzenters (73) senkrecht zu der Pressrichtung (P) ausgerichtet ist und/oder wobei die Drehachse (D) senkrecht zu der Längsrichtung (L) ausgerichtet ist und/oder wobei die Drehachse (D) des Exzenters (73) entlang der Vertikalen ausgerichtet ist.

8. Presseinrichtung (11) nach einem der vorhergehenden Ansprüche,
wobei der Antrieb (71) von dem Pressmittel (27) gehalten ist; und/oder wobei der Antrieb (71) über eine Drehmomentstütze (83) an einem Gehäuse (55) der Presseinrichtung (11) abgestützt ist,
insbesondere wobei der Antrieb (71) lediglich mittels der Drehmomentstütze (83) an dem Gehäuse (55) befestigt ist.

9. Presseinrichtung (11) nach einem der vorhergehenden Ansprüche,
wobei der weitere Exzenter (87) um eine Drehachse (R) drehbar ist, die parallel zu der Drehachse (D) des Exzenters (73) ausgebildet ist.

10. Presseinrichtung (11) nach einem der vorhergehenden Ansprüche,
wobei der Antrieb (71) dazu ausgebildet ist, den weiteren Exzenter (87) anzutreiben.

11. Presseinrichtung (11) nach einem der vorhergehenden Ansprüche,
wobei koaxial zu dem Exzenter (73) ein unterer Exzenter (93) angeordnet ist, wobei der Antrieb (71) dazu ausgebildet ist, den unteren Exzenter (93) anzutreiben,
insbesondere wobei der untere Exzenter (93) um 90 Grad versetzt zu dem Exzenter (73) ausgerichtet ist.

12. Presseinrichtung (11) nach Anspruch 11,
wobei der untere Exzenter (93) über eine weitere Koppelstange (95) mit zumindest einem weiteren unteren Exzenter (97) verbunden ist, wobei der weitere untere Exzenter (97) koaxial und um 90 Grad versetzt zu dem weiteren Exzenter (87) ausgerichtet ist,
insbesondere wobei die weitere Koppelstange (95) gekrümmt ausgebildet ist.

13. Presseinrichtung (11) nach einem der vorhergehenden Ansprüche,
wobei das Pressmittel (27) einen Schlitten (99) umfasst, wobei der Schlitten (99) in der Startposition (O) oberhalb des Exzenters (73) angeordnet ist, insbesondere wobei der Schlitten (99) den Exzenter (73) in der Startposition (O) gehäuseartig umgibt,
insbesondere wobei der Exzenter (73) in der Endposition (E) des Pressmittels (27) ohne einen Ausbau des Schlittens (99) zugänglich ist, insbesondere für eine Reinigung; und/oder insbesondere wobei das Pressmittel (27) ferner ein mit dem Schlitten (99) koppelbares Presswerkzeug (101) umfasst, wobei das Presswerkzeug (101) insbesondere werkzeuglos mit dem Schlitten (99) verbindbar und/oder von dem Schlitten (99) lösbar ist, wobei das Presswerkzeug (101) bevorzugt durch eine Steckverbindung mit dem Schlitten (99) verbindbar ist.

14. Presseinrichtung (11) nach einem der vorhergehenden Ansprüche,
wobei die Presseinrichtung (11) eine Schutzabdeckung (103) für das Pressmittel (27) umfasst, wobei die Schutzabdeckung (103) werkzeuglos entnehmbar ist,
insbesondere wobei die Schutzabdeckung (103) an einem Gehäuse (55) der Presseinrichtung (11) gehalten ist, wobei das Pressmittel (27) in Pressrichtung (P) aus der Schutzabdeckung (103) herausfahrbar ist; und/oder
insbesondere wobei die Schutzabdeckung (103) relativ zu dem Pressmittel (27) verschwenkbar ist; und/oder
insbesondere wobei die Schutzabdeckung (103) in einer Entnahmestellung (A) aus der Presseinrichtung (11) entnehmbar ist, insbesondere durch Schieben; und/oder insbesondere wobei die Schutzabdeckung (103) eine Sicherheitsschaltung (105) umfasst, welche dazu ausgebildet ist, zu erfassen, wenn die Schutzabdeckung (103) das Pressmittel (27) abdeckt.

## Claims

1. A pressing device (11) for pressing meat products, in particular frozen and/or partly frozen meat products, preferably fresh meat products and/or bacon, comprising a pressing chamber (13) which extends along a longitudinal direction (L) and into which a product to be pressed can be inserted,
wherein the pressing chamber (13) comprises at least one counter-element (31) and a pressing means (27) which is movable by a drive (71),
wherein the pressing means (27) can be moved from a starting position (O) along a pressing direction (P) towards the counter-element (31) into an end position (E) in order to compress the product, and
wherein the drive (71) is configured to drive at least one eccentric cam (73), which is rotatable about an axis of rotation (D), in order to move the pressing means (27) from the starting position (O) into the end position (E), wherein the pressing means (27) can be moved from the starting position (O) into the end position (E) by a rotation of the eccentric cam (73) of more than 90 degrees, in particular more than 120 degrees, preferably about 180 degrees, **characterized in that**
the eccentric cam (73) is connected to at least one further eccentric cam (87) via a coupling rod (85), wherein the eccentric cam (73) and the further eccentric cam (87) engage at the pressing means (27) at points of engagement (89, 91) spaced apart transversely to the pressing direction (P).

2. A pressing device (11) according to claim 1,
wherein the drive (71) comprises an electric motor (75) which is configured to drive the eccentric cam (73),
in particular wherein the electric motor (75) is configured as a servomotor; and/or
in particular wherein the axis of rotation (D) of the eccentric cam (73) corresponds to a motor axis of rotation (M) about which a motor shaft (77) of the electric motor (75) is rotatable, or in particular wherein the axis of rotation (D) of the eccentric cam (73) is aligned in parallel with the motor axis of rotation (M).

3. A pressing device (11) according to claim 2,
wherein a rotation of the motor shaft (77) can be converted into a rotation of the eccentric cam (73) without a deflection into a translatory movement.

4. A pressing device (11) according to claim 2 or 3,
wherein the eccentric cam (73) is connected to the electric motor (75) via a gear (79), in particular a reduction gear unit, preferably a planetary gear set,
in particular wherein the gear (79) is arranged coaxially to the electric motor (75) and the eccentric cam (73).

5. A pressing device (11) according to any one of the preceding claims,
wherein the eccentric cam (73) is connected to the pressing means (27) via a sliding element (81), wherein the sliding element (81) is configured to slide off at the pressing means (27) transversely to the pressing direction (P) during the movement of the pressing means (27); and/or
wherein the eccentric cam (73) directly mechanically contacts the pressing means (27).

6. A pressing device (11) according to any one of the preceding claims,
wherein the eccentric cam (73) has an eccentricity in a range from 50 mm to 100 mm, in particular from 70 to 80 mm; and/or
wherein a force of less than 2 kN and/or more than 0.8 kN can be transmitted to the pressing means (27) by the drive (71); and/or
wherein the pressing direction (P) is oriented perpendicular to the longitudinal direction (L).

7. A pressing device (11) according to any one of the preceding claims, wherein the axis of rotation (D) of the eccentric cam (73) is oriented perpendicular to the pressing direction (P), and/or wherein the axis of rotation (D) is oriented perpendicular to the longitudinal direction (L), and/or wherein the axis of rotation (D) of the eccentric cam (73) is oriented along the vertical.

8. A pressing device (11) according to any one of the preceding claims, wherein the drive (71) is held by the pressing means (27); and/or wherein the drive (71) is supported via a torque support (83) at a housing (55) of the pressing device (11),
in particular wherein the drive (71) is fastened to the housing (55) only via the torque support (83).

9. A pressing device (11) according to any one of the preceding claims, wherein the further eccentric cam (87) is rotatable about an axis of rotation (R) that extends in parallel with the axis of rotation (D) of the eccentric cam (73).

10. A pressing device (11) according to any one of the preceding claims, wherein the drive (71) is configured to drive the further eccentric cam (87).

11. A pressing device (11) according to any one of the preceding claims, wherein a lower eccentric cam (93) is arranged coaxially to the eccentric cam (73), wherein the drive (71) is configured to drive the lower eccentric cam (93),
in particular wherein the lower eccentric cam (93) is oriented offset by 90 degrees from the eccentric cam (73).

12. A pressing device (11) according to claim 11,
wherein the lower eccentric cam (93) is connected to at least one further lower eccentric cam (97) via a further coupling rod (95), wherein the further lower eccentric cam (97) is oriented coaxially to and offset by 90 degrees from the further eccentric cam (87),
in particular wherein the further coupling rod (95) is curved.

13. A pressing device (11) according to any one of the preceding claims, wherein the pressing means (27) comprises a carriage (99), wherein the carriage (99) is arranged above the eccentric cam (73) in the starting position (O), in particular wherein the carriage (99) surrounds the eccentric cam (73) in the manner of a housing in the starting position (O),
in particular wherein the eccentric cam (73) is accessible, in particular for a cleaning, without a removal of the carriage (99) in the end position (E) of the pressing means (27); and/or
in particular wherein the pressing means (27) further comprises a pressing tool (101) which can be coupled to the carriage (99), wherein the pressing tool (101) can in particular be connected without tools to the carriage (99) and/or can be released without tools from the carriage (99), wherein the pressing tool (101) can preferably be connected to the carriage (99) by a plug-in connection.

14. A pressing device (11) according to any one of the preceding claims, wherein the pressing device (11) comprises a protective cover (103) for the pressing means (27), wherein the protective cover (103) can be removed without tools,
in particular wherein the protective cover (103) is held at a housing (55) of the pressing device (11), wherein the pressing means (27) can be moved out of the protective cover (103) in the pressing direction (P); and/or
in particular wherein the protective cover (103) is pivotable relative to the pressing means (27); and/or
in particular wherein the protective cover (103) can be removed from the pressing device (11) in a removal position (A), in particular by pushing; and/or
in particular wherein the protective cover (103) comprises a safety circuit (105) which is configured to detect when the protective cover (103) covers the pressing means (27).

## Revendications

1. Dispositif de pressage (11) pour presser des produits carnés, en particulier des produits carnés surgelés et/ou congelés, de préférence des produits carnés frais et/ou du bacon, comprenant une chambre de pressage (13) s'étendant le long d'une direction longitudinale (L), dans laquelle un produit à presser peut être introduit,
dans lequel
la chambre de pressage (13) comprend au moins un contre-élément (31) et un moyen de pressage (27) susceptible d'être déplacé à l'aide d'un entraînement (71),
pour comprimer le produit, le moyen de pressage (27) peut être déplacé d'une position de départ (O) le long d'une direction de pressage (P) vers le contre-élément (31) jusque dans une position de fin de course (E), et l'entraînement (71) est conçu pour entraîner au moins un excentrique (73), susceptible de tourner autour d'un axe de rotation (D), pour déplacer le moyen de pressage (27) de la position de départ (O) jusque dans la position de fin de course (E),
le moyen de pressage (27) peut être déplacé de la position de départ (O) jusque dans la position de fin de course (E) par une rotation de l'excentrique (73) de plus de 90 degrés, en particulier de plus de 120 degrés, de préférence de 180 degrés,
**caractérisé en ce que**
l'excentrique (73) est relié à au moins un autre excentrique (87) par l'intermédiaire d'une bielle (85), l'excentrique (73) et l'autre excentrique (87) étant en prise avec le moyen de pressage (27) en des points d'attaque (89, 91) espacés transversalement à la direction de pressage (P).

2. Dispositif de pressage (11) selon la revendication 1,
dans lequel l'entraînement (71) comprend un moteur électrique (75) conçu pour entraîner l'excentrique (73),
en particulier, le moteur électrique (75) est réalisé sous la forme d'un servomoteur ; et/ou
en particulier, l'axe de rotation (D) de l'excentrique (73) correspond à un axe de rotation (M) du moteur autour duquel peut tourner un arbre moteur (77) du moteur électrique (75), ou
en particulier, l'axe de rotation (D) de l'excentrique (73) est orienté parallèlement à l'axe de rotation (M) du moteur.

3. Dispositif de pressage (11) selon la revendication 2,
dans lequel une rotation de l'arbre moteur (77) peut être transférée en une rotation de l'excentrique (73) sans la faire passer en un mouvement de translation.

4. Dispositif de pressage (11) selon la revendication 2 ou 3,
dans lequel l'excentrique (73) est relié au moteur électrique (75) par l'intermédiaire d'un engrenage (79), en particulier un engrenage réducteur, de préférence un engrenage planétaire,
en particulier, l'engrenage (79) est disposé coaxialement par rapport au moteur électrique (75) et à l'excentrique (73).

5. Dispositif de pressage (11) selon l'une des revendications précédentes, dans lequel l'excentrique (73) est relié au moyen de pressage (27) par l'intermédiaire d'un élément coulissant (81), l'élément coulissant (81) étant conçu pour glisser sur le moyen de pressage (27) transversalement à la direction de pressage (P) pendant le déplacement du moyen de pressage (27) ; et/ou
l'excentrique (73) est en contact mécanique direct avec le moyen de pressage (27).

6. Dispositif de pressage (11) selon l'une des revendications précédentes, dans lequel l'excentrique (73) présente une excentricité dans une plage de 50 mm à 100 mm, en particulier de 70 mm à 80 mm ; et/ou une force de moins de 2 kN et/ou de plus de 0,8 kN peut être transmise au moyen de pressage (27) à l'aide de l'entraînement (71) ; et/ou la direction de pressage (P) est orientée perpendiculairement à la direction longitudinale (L).

7. Dispositif de pressage (11) selon l'une des revendications précédentes, dans lequel l'axe de rotation (D) de l'excentrique (73) est orienté perpendiculairement à la direction de pressage (P), et/ou l'axe de rotation (D) est orienté perpendiculairement à la direction longitudinale (L), et/ou l'axe de rotation (D) de l'excentrique (73) est orienté le long de la verticale.

8. Dispositif de pressage (11) selon l'une des revendications précédentes, dans lequel l'entraînement (71) est maintenu par le moyen de pressage (27) ; et/ou
l'entraînement (71) est supporté sur un boîtier (55) du dispositif de pressage (11) par un support de couple (83),
en particulier, l'entraînement (71) est fixé au boîtier (55) uniquement à l'aide du support de couple (83).

9. Dispositif de pressage (11) selon l'une des revendications précédentes, dans lequel l'autre excentrique (87) peut tourner autour d'un axe de rotation (R) qui est parallèle à l'axe de rotation (D) de l'excentrique (73).

10. Dispositif de pressage (11) selon l'une des revendications précédentes, dans lequel l'entraînement (71) est conçu pour entraîner l'autre excentrique (87).

11. Dispositif de pressage (11) selon l'une des revendications précédentes, dans lequel un excentrique inférieur (93) est disposé coaxialement à l'excentrique (73), l'entraînement (71) étant conçu pour entraîner l'excentrique inférieur (93),
en particulier, l'excentrique inférieur (93) est orienté avec un décalage de 90 degrés par rapport à l'excentrique (73).

12. Dispositif de pressage (11) selon la revendication 11,
dans lequel l'excentrique inférieur (93) est relié à au moins un autre excentrique inférieur (97) par l'intermédiaire d'une autre bielle (95), l'autre excentrique inférieur (97) étant orienté coaxialement et avec un décalage de 90 degrés par rapport à l'autre excentrique (87),
en particulier, l'autre bielle (95) est réalisée sous forme courbée.

13. Dispositif de pressage (11) selon l'une des revendications précédentes, dans lequel le moyen de pressage (27) comprend un chariot (99), le chariot (99) étant disposé au-dessus de l'excentrique (73) dans la position de départ (O), en particulier, le chariot (99) entourant l'excentrique (73) à la manière d'un boîtier dans la position de départ (O),
en particulier, l'excentrique (73) est accessible dans la position de fin de course (E) du moyen de pressage (27) sans démontage du chariot (99), en particulier à des fins de nettoyage ; et/ou
en particulier, le moyen de pressage (27) comprend en outre un outil de pressage (101) susceptible d'être couplé au chariot (99), l'outil de pressage (101) pouvant être relié au chariot (99) et/ou être détaché du chariot (99), en particulier sans outil, l'outil de pressage (101) pouvant être relié au chariot (99) de préférence par une liaison par enfichage.

14. Dispositif de pressage (11) selon l'une des revendications précédentes, dans lequel le dispositif de pressage (11) comprend un couvercle de protection (103) pour le moyen de pressage (27), le couvercle de protection (103) pouvant être retiré sans outil,
en particulier, le couvercle de protection (103) est maintenu sur un boîtier (55) du dispositif de pressage (11), le moyen de pressage (27) pouvant être déployé du couvercle de protection (103) dans la direction de pressage (P) ; et/ou
en particulier, le couvercle de protection (103) peut pivoter par rapport au moyen de pressage (27) ; et/ou
en particulier, dans une position de retrait (A), le couvercle de protection (103) peut être retiré du dispositif de pressage (11), en particulier en le poussant ; et/ou
en particulier, le couvercle de protection (103) comprend un circuit de sécurité (105) qui est conçu pour détecter l'état où le couvercle de protection (103) recouvre le moyen de pressage (27).
